(19) Europäisches Patentamt

European Patent Office

Office européen des brevets

(11) **EP 1 376 406 A2**

(12) **EUROPEAN PATENT APPLICATION**

(43) Date of publication:
02.01.2004 Bulletin 2004/01

(51) Int Cl.⁷: **G06F 17/30**

(21) Application number: 03014309.3

(22) Date of filing: 25.06.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 26.06.2002 US 183830

(71) Applicant: **MICROSOFT CORPORATION**
Redmond, Washington 98052 (US)

(72) Inventors:
• **Deutscher, John**
 Sammamish, WA 98074 (US)
• **Gogia, Sunit**
 Kirkland, WA 98033 (US)

(74) Representative: **Grünecker, Kinkeldey, Stockmair & Schwanhäusser Anwaltssozietät**
Maximilianstrasse 58
80538 München (DE)

(54) **A system and process for creating an interactive presentation employing multi-media components**

(57) An interactive, multi-media presentation production system and process that integrates video, audio, presentation slides, text, and other media components into a manageable production environment for the producer of a presentation is provided. In essence, the production system and process is a professional grade toolkit that in its simplest implementation provides canned template starting points with semi-customization features and requires only some pointers to the media files being incorporated. However, the present presentation production system can also support ground up professional-studio customization for specialized presentations. For example, other higher-level production features includes a content preview, grid-based editing and manipulation tools, media import and filtering tools, graphic-based drag and drop editing features, and format and packaging features.

FIG. 1

EP 1 376 406 A2

**Description**

BACKGROUND

Technical Field:

The invention is related to the authoring of an educational or business presentation having multi-media components, and more particularly to a system and process for creating interactive, multi-media presentations that integrate video, audio, presentation slides, text, and other media components into a manageable production environment.

Background Art:

Multimedia presentations in their simplest form involve the use of a variety of media, such as video, audio, slideshows, and text to present scripted presentations to mass audiences for such purposes as virtual classrooms or other educational and business presentations. Though there has been a recent explosion in the use of such multimedia presentations, very little work is ongoing in the field of interactive multimedia presentations. Interactive multimedia presentations have the promise of providing an all new presentation and learning environments. Rather than the traditional canned presentation or lecture, a viewer of an interactive multimedia presentation should be able to play back the presentation while interacting with it to view or review specific sections, access additional information, search and even bookmark the presentation.

However, the creation of an interactive multimedia presentation is no trivial matter. Currently, the process is a complex and time consuming one requiring the writing of complex HTML and DHTML pages by hand to organize and coordinate the timing of the media components of the presentation. As a result, while the promise of interactive multimedia presentations is great, their use is likely to be hindered by the lack of better tools for users to create and edit these presentations. The key then is to provide authoring tools for creating interactive multimedia presentations that reduce the burden on the author.

The present invention is such a tool. It will allow users to create rich multimedia presentations in an easily understood and organized fashion while speeding up and simplifying the organization, data entry, timing, metadata tracking, publication and distribution of the presentation.

SUMMARY

The present invention is directed toward an interactive, multi-media presentation production system and process that integrates video, audio, presentation slides, text, and other media components into a manageable production environment for the producer of a presentation. In essence, the production system and process is a professional grade toolkit that in its simplest implementation provides canned template starting points with semi-customization features and requires only some pointers to the media files being incorporated. However, the present presentation production system can also support ground up professional-studio customization for specialized presentations. For example, other high-level production features includes a content preview, grid-based editing and manipulation tools, media import and filtering tools, graphic-based drag and drop editing features, and format and packaging features.

Through the use of customizable "templates", a variety of playback viewer interfaces can be generated from the same serialized data file. The templates are accessible locally through the presentation production system and process (or "tool" for short), or can be accessed remotely on one or more servers via a network connection. The use of templates allows the presentation production system to separate data from presentation logic. To this end, the tool generates a serializable, human readable, data file. The file's format stores metadata, organizational information, content (media) information, timing of events in relation to each other, as well as extended metadata about each piece of content. In tested versions of the tool, this file took the form of an XML data file.

The tool itself is essentially an intelligent visual data editor for making rich media presentations. Upon publishing from the tool, the required elements are organized and edited to contain the proper metadata in a single publishing directory. More particularly, the tool consists of graphic user interfaces for easily entering the data associated with the rich media presentation. The tool is also designed to make it simple and easy to edit the data of the underlying schema.

The custom templates are XSLT files with supporting script and XML that can be stored on a server for workgroup access or on a local machine. When the tool user first launches the tool, a template selection window is presented which the user employs to browse the available templates stored both locally and remotely. Picking the desired template, entering a name for the project and then a location for the project to be built, will copy the associated templates files to the selected build location.

In addition, upon selection of a template, a presentation tool window is presented to the user. The presentation tool window includes a variety of sectors that the user employs to craft the presentation. One of these sectors is the project file sector which is used to display and manage all of the media imported into the presentation, such as video, audio, documents, and other source files that will be used to create the presentation. A document tree format is employed to facilitate the foregoing task. One of the tree elements is the media folder that contains the master track video or audio file. The program contained in the master track file will drive the timeline of events in the presentation. All indexing, timing, and associated master track metadata will also be stored in this file. Whenever the user enters a video or audio file into the media folder and the file is designated as the master track, it is presented in the video preview sector of the tool window. The video preview sector is generally used to provide a playback of the master track program, and includes controls for at a minimum playing and pausing the video or audio program.

Another media element imported and displayed using the project file sector is a presentation slideshow deck. When the file containing the presentation slides is imported into the tool, thumbnails for each slide are generated for preview in the presentation slide preview sector of the tool window. Using the control arrows displayed in the slide preview sector allows the user to scan through the associated slides. Double clicking on a slide thumbnail launches the presentation slide creation program used to create the slide so that it can be edited.

Other media elements that can be imported and managed via the project file sector include demonstrations files which are typically video or audio programs, documents of various kinds, HTML files, animations, and the like. These elements are scheduled for display during the presentation as will be discussed later.

The presentation tool window also includes a presentation properties sector that is used to view and modify the layout appearance and functionality attributes of the selected template via a series of property grids that are accessible by selecting the appropriate tab. One of these grids is the template editor property grid which loads all of the selected templates customizable data. Editable features include access to the colors of the template, font, layout features, images, presentation slides export options, slide thumbnail export options, and video and audio playback options, among others.

Another of the grids is the metadata property grid. The metadata property grid will expose all of the customizable metadata that can be entered into the selected template. Each template can define its own list of customizable metadata that will be exposed to the grid. Default metadata is also populated into the metadata property grid. In addition, a list of "schemas" is selectable to allow the user to enter information from a pre-defined schema. Selecting a schema from a drop-down menu will populate the grid with the associated schema information. Users will be able to enter the information that is relevant to their presentation and it will be written into the finalized presentation data file. Users can also choose a language from a drop-down menu. All available language code keys will be listed in the drop-down. Upon selection of a new language, the user can enter the associated metadata in that language into the data grid and it will be stored in the presentation data file with an associated language key. This enables the playback viewer to display metadata in different languages based on the user's language selection.

A player property grid is also accessible in the presentation properties sector. The player property grid allows the user to edit and view the details of the master track media file. The master track media file is the video or audio file that serves as the main presentation timeline. Some of the settings associated with this file are displayed for informational purposes only and cannot be edited. However, other settings are available to edit, such as the playback size, as well as the dimensions and quality settings of the master track. Information in this property grid is stored in both the presentation data file and the media file upon building the project.

The presentation tool window further includes a work sector where various data entry grids and informational panes are displayed. Each of these can be accessed by selecting a tab displayed in the work sector.

In general, the data entry grids allow the user to enter the information into the presentation data file and the master track media file that is needed to drive the timeline of the presentation. The first of these grids, which is displayed by default once the master track program has been imported, is the scripts grid. The scripts grid is where the user enters events called script commands that will be triggered during the playback of the presentation. Script commands can include presentation slide flips, launching a demo, displaying documents, opening a URL, accessing a web service, or any other custom functionality that is designed into the selected template. Script commands can be created by the user entering a time code, a script type (e.g., slide, demo, etc.), and a script parameter specifying the particular slide, demonstration program, and the like that is involved. Script commands can also be edited through the use of this grid.

A markers grid is also accessible in the work sector by selecting the associated tab. The markers grid allows for the editing of the table of contents of the presentation. Major divisions or events along the timeline can be titled for fast navigation and indexing to a time code representing an elapsed time of the master track presentation. Typical presentations include a contents marker for each major slide change, or change in topic within the presentation. Sub-topics are also marked in the markers grid, and can be arranged into hierarchies under the contents tab as will be described shortly. To add content markers to the grid, the user enters the time code and associated content marker text into the data grid. Information within the grid can be edited just as in the scripts grid.

There is also a transcription grid that can be accessed by selecting its tab. The transcription grid is where the user can enter a line-by-line transcription of the presentation in multiple languages for display in the final presentation.

Users can enter transcript information by entering the text into the grid with an associated start-time time code. The user can choose how granular the timeline should be with the transcript grid. Transcription can be spaced close together in short sentences or widely apart in large paragraph blocks. A language drop-down box will also allow the user to select the associated language key with which this transcription data gets stored. The finalized presentation data file can store multiple language transcriptions, indexed by language keys.

It is noted that in the foregoing scripts, markers and transcription grids, the data can be entered by importing it via a formatted text-based file. This method of entering the data is especially useful with the transcription grid in that users can dramatically speed up the process of entering transcription information compared to manual entry methods. The file will be in a human readable format for easy integration with word processing, and spreadsheet applications. Users import the file into the presentation production system and select the associated language key. The data is then parsed into the presentation data file and is available for editing in the associated data grid.

It is also noted that if the script, marker or transcription data is imported with offset time code, as is often the case when logging transcriptions from tape, the presentation tool will detect and offer to zero out the time code so that it starts at zero. The user can also perform this manually by accessing an offset time code correction feature.

The next feature that can be displayed in the work sector by selecting its tab is the contents/links editor. The contents/links editor provides a two-part display with one side showing a table of contents tree that includes a graphical representation of the contents markers organized according to their time code, and the presentation slides scheduled via a scripts command to be shown during the part of the presentation applicable to each contents marker. This tree can be edited by the user to reflect the hierarchy of the contents markers. The other side of the display is a links grid for adding related links at the global, contents marker or slide level. These links are displayed in the presentation during the appropriate times (i.e., throughout the presentation in the case of a global link, during the part of the presentation related to a contents marker if a marker link, or during the time a slide is displayed if a slide link). To add links, the user selects a global link node, or the desired marker or slide node, in the table of contents tree, and then enters the name of the link and its associated URL in the entry fields of the links grid.

In addition to the foregoing data grids, certain informational panes can be displayed in the work sector by selecting the appropriate tab. For example, a presentation data file preview pane is available to the user for reviewing the underlying data file that is being generated by the presentation tool as the user crafts the presentation. Another informational pane that can be displayed is the output panel. The output panel details build information and status, as well as error reporting during the build process. When a build is initiated this panel automatically appears and details information of each step in the build process. Errors are reported to this panel for easy troubleshooting during the build process.

Finally a preview display can be accessed and shown in the work sector. The preview display allows the user to view the presentation that is being authored for the purpose of review. Selecting the preview display tab causes the presentation tool to do a rapid build of the project and display it in the work sector. The author can then confirm the selections of color, font, layout, and timing that they have made. This allows the user to check quality and review their work within the tool itself.

The presentation tool also has a visual timeline editor. The visual timeline editor provides a graphic representation of the scheduled script commands, contents markers and transcription segment entries in a "visual" timeline format. The foregoing events are represented by icons displayed in separate horizontally oriented script command, markers and transcription bands. An elapsed time timeline ruler disposed above the bands can be used to determine the time code associated with each scheduled event in relation to the master track program. As such, it allows the user to easily see these scheduled events and obtain basic information about them, without having to resort to the previously-described data grids. In addition, the timeline editor gives the user the capability to move the scheduled events right from the timeline. Specifically dragging an event icon updates the underlying time code displayed in the data grids, and changes the presentation data file. Further, dragging a current elapsed time bar through the timeline updates the current position of the master track playback and allows the user to preview where events happen. Thus, as the user moves through the timeline the master track stays in sync. In addition, the slide events are updated and previewed in the slide preview window. The user can also access the various data grids directly from the timeline to edit the scheduled events.

Generally, using the presentation tool to produce a presentation according to the present system and process is accomplished as follows. First, a presentation template is selected as described previously using the template selection window. The template file associated with the selected template specifies layout features and interactive functionality for an interactive presentation window which when rendered displays the presentation being authored. Next, a presentation tool window is displayed to the user and it is populated with the selected template's layout and functionality data. The presentation tool window provides a graphic user interface to assist the user in tasks including specifying media files to be imported, modifying the layout and functionality data and entering scheduling information associated with the presentation. Specifically, the user first employs the presentation tool window to import media files making up the multi-media content of the presentation. The user also modifies or adds to the layout and functionality data associated with the selected template as desired, and inputs scheduling data specifying when each component of the multi-media content is to be played or displayed in the presentation window. As the foregoing data is being entered, the presentation tool creates a presentation data file including all the layout and functionality data, as well as scheduling data, associated with the presentation.

A presentation package is then built. This includes exported versions of the imported media components, and a presentation file which is executable by a viewer of the presentation and when executed renders the aforementioned presentation window for viewing the presentation. It is noted that the presentation file is created by incorporating the data contained in the presentation data file into the file associated with the selected template.

As for exporting the media components, this includes indexing the master track program file by first eliminating any existing un-needed metadata from the header of the file, and then writing the aforementioned scheduling data, as well as player settings, into the header. The indexed master track program file is then exported. The user-established link indicators that identify when in the master track video or audio program a particular user-identified link is to be displayed in the presentation, are also exported. To this end, a links file is created for the user-established link indicators. Any demonstration, animation, document, or HTML files that were imported and scheduled are also exported. All the foregoing exported files are exported to a project directory whose name and location were specified by the user in the template selection window as part of the process of selecting a template. The aforementioned presentation file is also stored in this directory.

During the presentation package building process, the output panel is displayed in the work sector of the presentation tool window, as discussed previously. This panel provides information and a status regarding the progress of the building process. This includes a description of any error encountered during the process.

Once the presentation is built, it can be previewed in the presentation tool window as described previously. If the user desires to make changes, the presentation package can be edited by changing the layout and functionality data and/or the scheduling data in the presentation data file using the presentation tool window, or by importing additional media files or presentation slides, or both. The presentation package is then rebuilt and can be previewed once again.

In addition to the just described benefits, other advantages of the present invention will become apparent from the detailed description which follows hereinafter when taken in conjunction with the drawing figures which accompany it.

DESCRIPTION OF THE DRAWINGS

The specific features, aspects, and advantages of the present invention will become better understood with regard to the following description, appended claims, and accompanying drawings where:

FIG. 1 is a diagram depicting a general purpose computing device constituting an exemplary system for implementing the present invention.

FIG. 2 shows a user interface screen according to the present invention for selecting a presentation template.

FIG. 3 shows a user interface screen according to the present invention for authoring an interactive, multi-media presentation.

FIG. 4 shows an enlarged view of the project file sector of the user interface screen of Fig. 3.

FIG. 5 shows an open file dialog box user interface window for importing media components which is accessed via the project file sector of Fig. 4.

FIG. 6 shows an enlarged view of the video preview sector of the user interface screen of Fig. 3.

FIG. 7 shows an enlarged view of the presentation slide preview sector of the user interface screen of Fig. 3.

FIG. 8A shows an enlarged view of the presentation properties sector of the user interface screen of Fig. 3, with a portion of the template editor property grid being displayed.

FIG. 8B shows an enlarged view of a part of the presentation properties sector of the user interface screen of Fig. 3, with a different portion of the template editor property grid being displayed.

FIG. 8C shows an enlarged view of a part of the presentation properties sector of the user interface screen of Fig.

3, with an expanded template attribute of the template editor property grid being displayed.

FIG. 9 shows an enlarged view of the presentation properties sector of the user interface screen of Fig. 3, with the metadata property grid being displayed.

FIG. 10 shows an enlarged view of the presentation properties sector of the user interface screen of Fig. 3, with the player property grid being displayed.

FIG. 11 shows an enlarged view of the work sector and the visual timeline editor of the user interface screen of Fig. 3, with the scripts grid being displayed in the work sector.

FIG. 12A is an exemplary script command list from an imported scripts file.

FIG. 12B is an exemplary contents marker list from an imported contents marker file.

FIG. 13 shows an enlarged view of the work sector of the user interface screen of Fig. 3, with the scripts grid and a pop-up script command editing window being displayed.

FIG. 14 shows an enlarged view of the work sector of the user interface screen of Fig. 3, with the markers grid being displayed.

FIG. 15 shows an enlarged view of the work sector of the user interface screen of Fig. 3, with the markers grid and a pop-up contents marker editing window being displayed.

FIG. 16 shows an enlarged view of the work sector of the user interface screen of Fig. 3, with the transcription grid being displayed.

FIG. 17 shows an enlarged view of part of the work sector of the user interface screen of Fig. 3, with a portion of the transcription grid and a pop-up transcription entry editing window being displayed.

FIG. 18 shows an offset time code user interface window used for correcting time code offsets between an imported scheduling data list and the master track program.

FIG. 19 shows an enlarged view of the work sector of the user interface screen of Fig. 3, with the content/links editor being displayed.

FIG. 20 shows an enlarged view of the work sector of the user interface screen of Fig. 3, with the presentation data file preview pane being displayed.

FIG. 21 shows an enlarged view of the work sector of the user interface screen of Fig. 3, with the output panel being displayed.

FIG. 22 shows an enlarged view of the work sector of the user interface screen of Fig. 3, with the preview display being displayed.

FIG. 23 shows an enlarged view of the visual timeline editor sector of the user interface screen of Fig. 3.

FIG. 24A shows an enlarged view of part of the visual timeline editor sector of the user interface screen of Fig. 3, with a pop-up scripts command details window being displayed.

FIG. 24B shows an enlarged view of part of the visual timeline editor sector of the user interface screen of Fig. 3, with a pop-up contents marker details window being displayed.

FIG. 24C shows an enlarged view of part of the visual timeline editor sector of the user interface screen of Fig. 3, with a pop-up transcription entry details window being displayed.

FIG. 25 shows a user interface screen according to the present invention for saving a modified presentation template.

FIGS. 26A-B show a flow chart diagramming an overall process for authoring an interactive, multi-media presentation in accordance with the present invention.

FIG. 27 shows a flow chart diagramming a process for building a presentation package that implements the building action of Fig. 26B.

FIG. 28 is a diagram illustrating the relationships among the components of the presentation package.

FIG. 29 is a diagram illustrating the structure of a LRN formatted imsmanifest.xml file.

DETAILED DESCRIPTION OF THE PREFERRED EMBODIMENTS

In the following description of the preferred embodiments of the present invention, reference is made to the accompanying drawings which form a part hereof, and in which is shown by way of illustration specific embodiments in which the invention may be practiced. It is understood that other embodiments may be utilized and structural changes may be made without departing from the scope of the present invention.

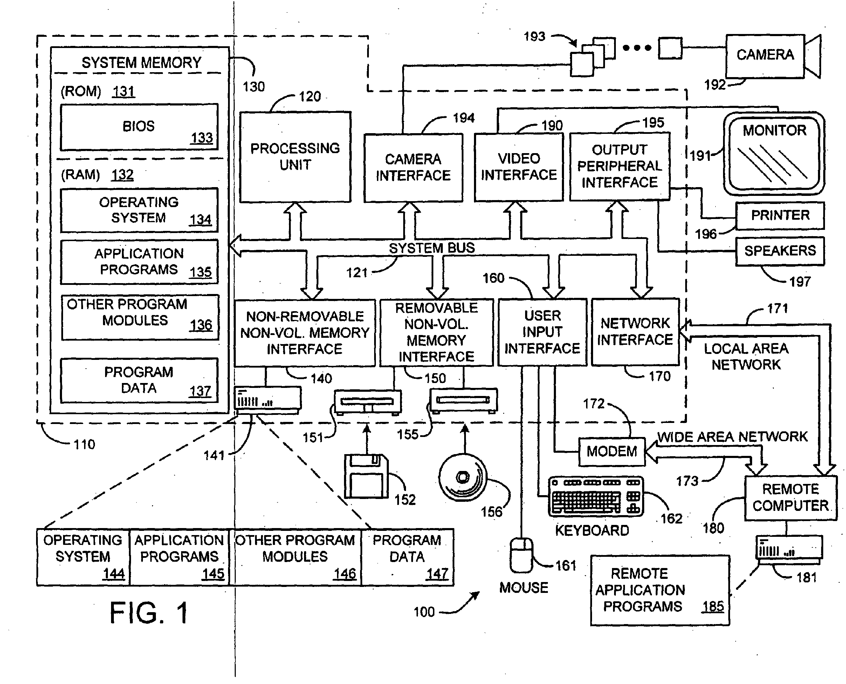

Before providing a description of the preferred embodiments of the present invention, a brief, general description of a suitable computing environment in which the invention may be implemented will be described. Figure 1 illustrates an example of a suitable computing system environment 100. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to Figure 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of Volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136, and program data 137.

The computer 110 may also include other removable/non-removable, volatile/nonvolatile computer storage media. By way of example only, Figure 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through an non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Figure 1, provide storage of computer readable instructions, data structures, program modules and other data for the computer 110. In Figure 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195. Of particular significance to the present invention, a camera 163 (such as a digital/electronic still or video camera, or film/photographic scanner) capable of capturing a sequence of images 164 can also be included as an input device to the personal computer 110. Further, while just one camera is depicted, multiple cameras could be included as input devices to the personal computer 110. The images 164 from the one or more cameras are input into the computer 110 via an appropriate camera interface 165. This interface 165 is connected to the system bus 121, thereby allowing the images to be routed to and stored in the RAM 132, or one of the other data storage devices associated with the computer 110. However, it is noted that image data can be input into the computer 110 from any of the aforementioned computer-readable media as well, without requiring the use of the camera 163.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted in Figure 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

The exemplary operating environment having now been discussed, the following sections will be devoted to a description of the program modules embodying the invention.

1.0 The Template Selection Window

Upon initiating the present multi-media, interactive presentation production program (or production tool for short), the person who is producing the presentation (hereinafter the "user") is presented with a template selection window, which is typically displayed on the screen of the computing device hosting the production tool program. In general, the template selection window provides one or more layouts for the presentation that is to be created. The layout of the presentation refers to where in the presentation window the video is displayed, where the presentation slides are displayed, where a contents section is displayed and so on. The layouts correspond to various templates that in essence are custom XSLT files with supporting script and XML. These templates are designed to render a particular presentation window configuration capable of playing a presentation and interacting with the viewer, once populated with media components and scheduling data. They are created using conventional template creation techniques, any of which can be employed for this purpose. An example of an interactive multimedia presentation created in accordance with the present system and process that employs such a template is described in a co-pending application entitled "Interactive Presentation Viewing System Employing Multi-Media Components" having some of the same inventors as this application and assigned to the common assignee. This co-pending application was filed on_____ and assigned serial number_____. However, the co-pending application is just an example, the template used to create a presentation could include more or fewer media components and could exhibit more or less interactive functionality.

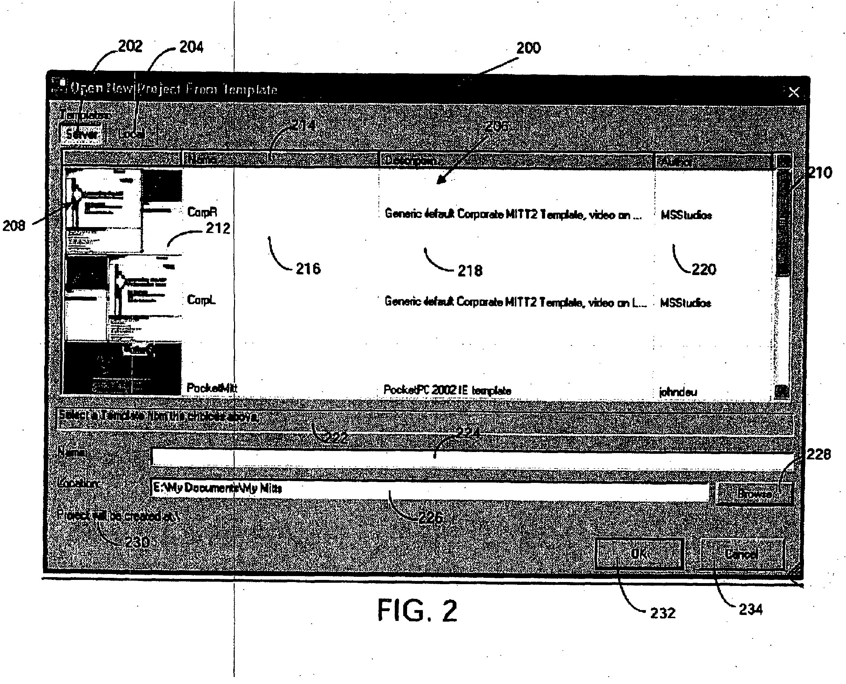

One example of the layout of the template selection window is shown in Fig. 2. This layout was employed in tested versions of the present system. At the top, left-hand corner of the window, there are two buttons, which the user can select by any conventional means (such as by placing the screen cursor over the button and activating a selection switch on an input device, e.g., "clicking" a button on a computer mouse). The first of the two buttons displayed at the top of the template window 200 is the server button 202, and the other button is the local button 204. These buttons 202, 204 are mutually exclusive in that when one is selected the other is not. When the local button 204 is selected, only the layouts associated with those templates residing in the memory of the host computer are presented for the user's selection. If, however, the server button 202 is selected, and the host computer is connected to a network, the presentation production system will find templates stored on remote servers accessible from the network and which are listed in a configuration file found in the system's root directory. The layouts of the templates found in this search are then presented to the user. It is noted that if the host computer is "offline", the local templates are displayed by default.

The layouts of the local or remotely-located templates, as the case may be, are presented to the user in the layout display sector 206 of the template window 200. The layout display sector 206 has a separate horizontal strip 208 dedicated to each available template, with the strips being stacked vertically. A standard graphic user interface (GUI) scroll bar 210 is provided at one side of the display sector 206 to allow the user to scroll up or down to view all the layout strips 208 if there are too many available to fit them all in the vertical space allotted to the sector. Each layout strip 208 includes a series of columns providing information about the associated template. The first column provides a thumbnail image 212 of the layout associated with the template. Thus, the user can see in miniature what the presentation window would look like if that template were chosen. The second column has the title "Name" above it in a descriptor bar 214 residing at the top of the layout display sector 206. This name column 216 provides the name given the template. There is also a third column entitled "Description" in the descriptor bar 214. This description column 218 provides a brief description of the template. The description could include a list of features offered in the template, or this information could be placed in a separate "Features" column (not shown). The last column in the example of the layout display sector 206 shown in Fig. 2, is entitled "Author" in the descriptor bar 214. The author column 220 provides information about the person or group that created the template. The layout thumbnail and other information that is used to populate the columns of each layout strip 208 is parsed from metadata stored in the file containing the template. In the case of a remotely stored template, only the data needed to populate the layout strip 208 is downloaded prior to the user selecting that template. It is noted that the template metadata is created by the author of the template, and could included additional information that can be incorporated into an existing column or placed in a new column, as desired. It is not intended to limit the present system to just those informational columns described above. Rather any number of columns can be added as desired. If the horizontal space allotted to the layout display sector is inadequate to display the entire layout strip, a scroll bar would be added at the top or bottom to allow the user to scroll and reveal any information that will not fit.

An instruction bar 222 is located just below the layout display sector 206. This bar 222 provides information and tips to the user on how to proceed with the template selection process. For example, in Fig. 2, the template selection window 200 is shown as it would exist before a template has been selected. At this stage, the instruction bar 222 states "Select a Template from the choices above", thereby aiding the user in determining what to do next. In addition, the user can be given access to a standard help directory (not shown) to obtain further assistance.

The user chooses the particular layout that he or she wishes to use in creating a presentation and selects the associated layout strip 208. In tested versions of the presentation production system, the selection procedure entailed placing the screen cursor over the layout strip 208 of the desired layout and "single clicking" an input device. Upon selection several things happen. Namely, the layout strip 208 is highlighted, the name of the selected template appears in a name field 224 located below the layout display sector 206 and prospective download location is provided in a location field 226 located just below the name field 224. The name appearing in the name field 224 is the name that will be given to the presentation project. While it is initially filled with the name of the selected template, the user can change it to any name he or she desires. The prospective download location is initially set to a prescribed default. For instance, in the example window shown in Fig. 2, the default download location was the "My Mitts" folder in the "My Documents" directory of the "E" drive of the host computer. The download location refers to where the data constituting the selected template will be stored. The user can change this as well. A standard browse button 228 is provided to the right of the location field 226 to assist the user in specifying an alternate download location if desired. Just below the location field 226 is a "Project" line 230. When a template is selected this line states that the project will be created at the selected (or default) download location and that the template file will be given the selected name (or default template name). Once the user is satisfied with the selected template, file name and download location, a template selection button 232 (appearing as the "OK" button in tested versions of the present system) is selected to download the template, as well as other supporting images, code, and media files to the selected build location. It is noted that the user can also select the "Cancel" button 234 at any time during the foregoing process to exit the template window 200.

While not shown in Fig. 2, the user can also be given access to a category filter--for example via a "Category" button that would open a drop-down list specifying particular categories of templates. The user accesses this list prior to selecting a template and selects one of the categories. As a result, only those templates fitting the selected categories will remain in the layout display sector. For instance, some templates might be design for training presentations and could be categorized under a "training category". Other might be design for business presentations and be categorized under a "business" category. The author of the template would be required to specify in the metadata associated with the template file what prescribed category or categories apply to the template.


2.0 The Presentation Tool Window

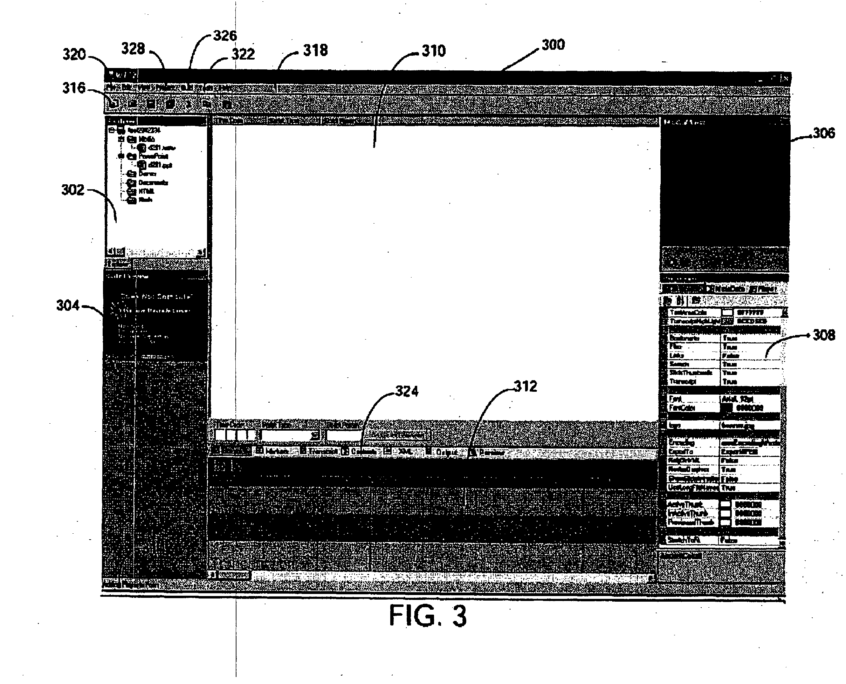

Upon selecting a template, the presentation tool window is opened and replaces the template window on the user's display screen. An example of such a window is provided in Fig. 3. This exemplary production tool window is used to define the layout and features of the presentation being created.


2.1 The Presentation Tool Window Layout

Referring to Fig. 3, the overall window layout of a full-featured version of the presentation production system is shown. Beginning in the upper left-hand corner of the tool window 300, a project file sector 302 is found. Just below the project file sector 302 is a presentation slide preview sector 304. In the upper right-hand corner of the tool window 300 is the video preview sector 306, and directly below that is the presentation properties sector 308. In the area between the above-described sectors is a work sector 310 that displays a variety of work grids and informational panes depending on what part of the presentation is being constructed at the time. Just below the work sector 310 is a visual timeline editor 312, and below that is a status line 314. Overlying the aforementioned sectors is a short-cut bar 316 displaying various icons for performing standard operations such as opening a presentation file, saving a file, cutting, copying and pasting, and the like, and finally above that is a menu bar 318 for accessing drop-down menu lists. Most of the commands found in these drop-down lists are simply alternate ways of accomplishing certain actions that will be described in the sections to follow, and so will not be expounded upon herein. However, those functions contained in the drop-down lists that are not redundant will be fully described in these sections.

It is noted that all the sectors of the presentation tool window are resizable via conventional graphic user interface resizing techniques. If the resizing of a particular sector results in there not being enough space either vertically or horizontally to display all the elements of that sector, then a standard slider-type scroll bar will appear at the top or bottom of the sector for scrolling horizontally, or at one side of the sector for scrolling vertically, or both. It is noted that even in the default size of some of the presentation tool window sectors, there will not be enough space to accommodate all the elements typically displayed therein. In these cases the aforementioned slider-type scroll bars are included, as will be discussed in the sections to follow.

2.2 The Project File Sector

In general the project file section is used to enter the media components of the presentation, such as a video or audio program, electronic presentation slides (which are often referred to as the slide deck), demonstrations, documents, HTML files, or animation files (e.g., Flash files). Once the media components are entered, the project file sector displays the components in a file tree format to the user.

The process of entering the media components starts with the user entering a video or audio program into the presentation production system to create a "Media" file. This file acts not only as the audio-visual or audio portion of the presentation, but also becomes the master track of the presentation from which all the other media elements are scheduled. To this end, all indexing, timing, and associated master track metadata are stored in the media file as well, as will be explained in more detail later.

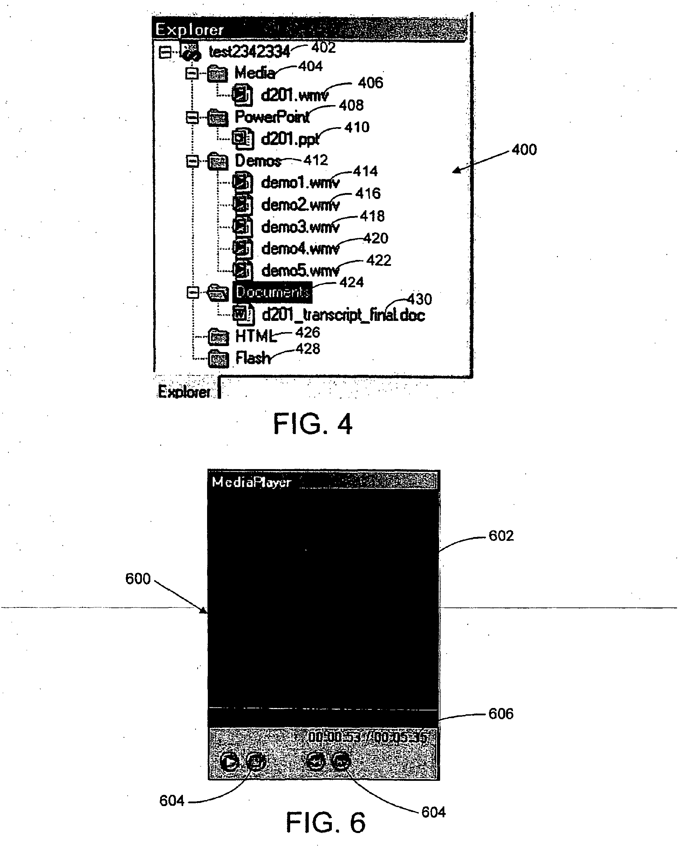

The file containing the video or audio track that is to become the foundation for the presentation's media file can be entered in a number of ways. For example, the user can select the media folder icon and label 404 in the project file sector (as best seen in the enlarged view of the sector 400 provided in Fig. 4.) In tested versions of the present system, one way the user selected the media folder (or any other element displayed in the project file sector 400) was by placing the screen cursor over the icon or label and "double-clicking" with the input device. An alternate way that the user could select the media folder (or any other element) was to "click" the secondary button on the input device (typically referred to as "right-clicking") to display a pop-up window containing a list of appropriate actions related to the folder being selected. One of these choices is an add action. The user then selects this action from the list (e.g., via a "single-clicking" maneuver). Similarly, the user can also select the files tab in the menu bar to display a drop-down list of actions which includes an "Add Media" action. The user would then select this action from the list (e.g., via a "single-clicking" maneuver).

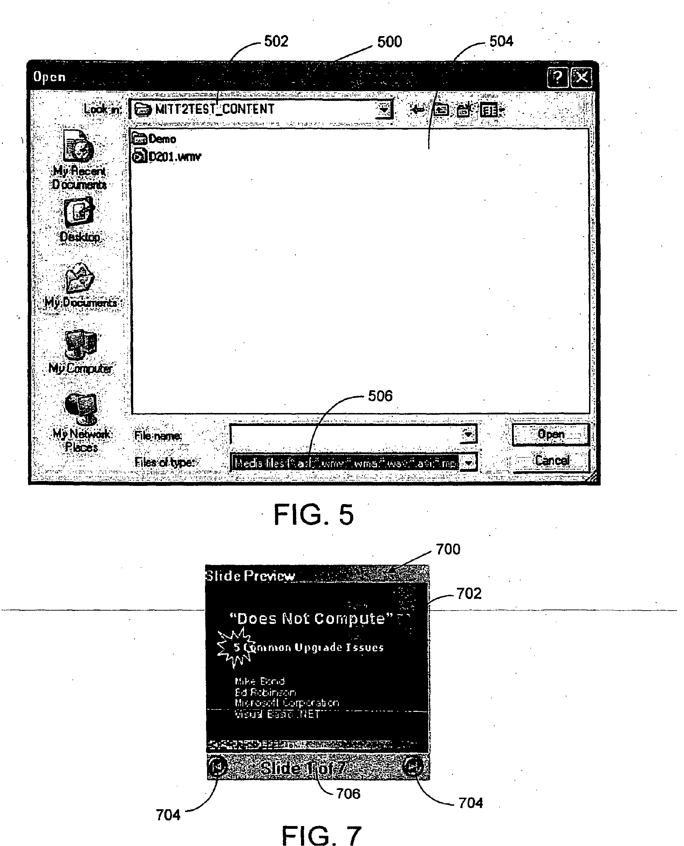

Once the media folder is selected, a standard open file dialog box 500, as depicted in Fig. 5, appears over at least a portion of the tool window. The user employs the dialog box 500 to find and select the file associated with the video or audio program that is to become part of the media file. This is accomplished in the typical manner, and can include files stored locally on the host computer or remote files accessible via a network connection. For instance, in the example depicted in Fig. 5, the user has specified the folder entitled "MITT2TEST_CONTENT" in the "Look in" field 502. This folder contained a demo folder and a video file designated as "d201.wmv", both of which are listed in the dialog box's display area 504. It is noted that the "Files of Type" field 506 lists only those prescribed types of files that are acceptable for entry into the media file, thereby acting as a filter for the file types the system can handle. For example, in tested versions of the presentation production system, these file types included .asf, .wmv, and .wma files. These are just examples, the system can be readily adapted to handle any file type designed for video or audio files, and is not limited to just those employed in the tested versions.

Once the user selects an appropriate video or audio file using the open file dialog box, the presentation production system copies this file into the system. In addition, the file tree in the project file sector is updated to display the video or audio file under the media file folder. For example, as shown in Fig. 4, the media folder 404 associated with the presentation project 402 named "test2342334" has the aforementioned video file 406 entitled "d201.wmv" associated with it.

There can be more than one video or audio file entered into the media file folder. For example, the user might want to enter a lower bandwidth version of a video file, or video or audio files of the same subject but in different languages. However, even though more than one video or audio file can be entered in the media folder, only one of the files can be the master track. Thus, if more than one file is entered, the user must designate one of them as the master track file. The selected file then appears highlighted in the project file sector tree, or visually distinguished in some way (e.g., special icon, check marked, etc.).

The user also enters a presentation slide file into a presentation slide folder 408 (which is entitled PowerPoint referring to Microsoft Corporation's PowerPoint® presentation graphics program in the example project file sector depicted in Fig. 4.). This is accomplished in the same way it was when the user entered the video or audio file into the media folder. For example, in Fig. 4, the project file tree indicates that the user entered a presentation slide file 410 entitled "d201.ppt". It is noted that more than one presentation slide file could also be entered in the Slide folder 408. For example, the user might want to have presentation slides in different languages. As will be described later, the display of the presentation slides is timed based on what part of the master track file is being played. This is essentially done by establishing a script which specifies at what elapsed time of the master track that a particular slide is to be displayed. Accordingly, if alternate presentation slide decks are to be used, each slide would have to cover the same subject matter so as to track with the same script, or a separate script would have to be established for each deck. As with the media files, if more than one presentation slide file is entered, the user must designate one of them as the primary slide deck, i.e., the one which is to be displayed. This selected file then appears highlighted, or visually distinguished in some manner, in the project file tree.

In addition to the media files and presentation slides, the user can optionally enter various demonstration, document, HTML and animation files which are automatically called and displayed over at least a portion of the presentation window, or are made accessible to the viewer of the presentation. For example, the user can enter one or more demonstrations which are, for example, video or audio files. These demonstration video or audio programs are typically scheduled (as will be described later) to be played at some elapsed time of the master track program. Thus, when a particular elapse time of the master track program is reached, it is paused and the demonstration video or audio clip is played. Once the demonstration clip is completed, the master track resumes playing. The user enters demonstration files in the same way he or she entered media or presentation slide files, except the demonstration files are entered into the demos folder 412 in the project file sector 400. For example, in the example shown in Fig. 4, the user entered five separate demonstration files 414, 416, 418, 420, 422, named "demo1.wmv" through "demo5.wmv", respectively.

The user can also enter document files in the documents folder 424, HTML files in the HTML folder 426 and animation files in the Flash folder 428 in the project file sector. For example, Fig. 4 shows a "Word" file 430 (i.e., a document file generated by Microsoft Corporation's Word® word processing program) named "d201_transcript_final. doc" that is entered in the documents folder 424. It is noted that the example shown in Fig 4 does not show any HTML or animation files that were entered by the user. This is evident by the lack of any files being listed in the tree under these folders and by the lack of a boxed plus sign symbol which is indicative of the existence of files in a folder which are not displayed, as is the convention for the tree structure employed in the project file sector. Should a user enter document, HTML or animation files they would typically, although not necessarily, be scheduled (as will be described later) to be displayed during a specified time period associated with the master track program. The master track program may or may not be paused during this display period. Typically when a window makes an appearance in the presentation, the presentation would be paused. However, the selected template would control this and could be configured to continue playing the presentation.

As indicated previously, the project file sector does more than just provide a quick and user friendly way of entering the media elements of the presentation being created. It also provides a convenient graphic representation of the media elements and their locations via the file tree format. As is conventional with these tree formats, the user can expand and collapse the various folders to show all the files in a folder or just the folder icon and label. This is done using the boxed plus signs and minus signs adjacent the folder icons. Essentially, a user can expand a contracted folder by "clicking on" the boxed plus sign that will be displayed adjacent the folder icon when files exist in the folder which are not currently displayed in the tree. Likewise, if the user wants to reduce the complexity of the tree display, he or she can collapse folders that have their associated files displayed by "clicking on" the boxed minus sign displayed adjacent the folder icon to hide the file designators.

2.3 The Video Preview Sector

The video preview sector is generally used to provide a playback of the video presentation or audio program. Whenever the user enters a video or audio file into the media folder and the file is designated as the master track, it is presented in the video preview sector. It is noted that in tested versions of the present presentation production system, the first video or audio file entered into the media folder was presumed to be the master track and so was automatically displayed in the video preview sector. However, if a later-entered file is designated as the master track, that video or audio file would be presented in the video preview sector in place of the initially-entered program. More particularly, as best seen in the enlarged view of the video preview sector 600 shown in Fig. 6, the video or audio file designated as the master track is displayed in a playback space 602. Initially, a video is presented in the preview sector by statically displaying the first frame of the video program. In the case of an audio program, the playback space of the preview sector could be left blank (typically all black), or a predetermined visual frame or effect could be employed. For example, the playback space could display an image reading "Audio Only", both initially and throughout the playback of the program. Alternatively, a prescribed animation sequence could be presented in the playback space 602 during the playback of an audio program. In this case, initially the first frame of the animation sequence would be statically displayed in the playback space 602.

The video preview sector 600 also includes control buttons 604 for controlling the playback of the video or audio program. While the number of control buttons 604 can vary, they preferably at least include buttons for playing, pausing, "rewinding", and "advancing" the video, as shown in the exemplary view of the preview sector 600 shown in Fig. 6. Other buttons to control features such as muting the audio track of a video program, returning to the beginning of the video or audio program, and the like, can be included as well. The viewer selects the control functions by selecting the appropriate button 604 (e.g., via a "single-click" maneuver).

In addition to the video player control buttons 604, the video preview sector 600 also includes a counter 606 showing both elapsed time from the beginning of the video or audio presentation and the total running time of the program. For example, in tested versions of the presentation production system, this counter took the form of "XX:XX: XX/XX:XX:XX", where the numbers before the slash represent the hours, minutes and seconds respectively of the elapsed time, and the numbers to the right of the slash represent the hours, minutes and seconds of the total running time.

2.4 The Presentation Slide Preview Sector

The presentation slide preview sector is generally used to display the presentation slides associated with the selected slide file entered into the presentation slide folder. To this end, referring to the enlarged view of the presentation slide preview sector 700 in Fig. 7, whenever the user enters a presentation slide file into the slide folder and the file is designated as the primary slide deck that is to be displayed, thumbnail images of each slide are generated and the thumbnail associated with the first slide is displayed in a slide display area 702 of the sector. Control buttons 704 are included to allow the user to move forward and backward through the slide deck with the currently selected slide being displayed in the display area 702.

A presentation slide counter 706 is also provided in the presentation slide preview sector. In tested versions of the present system, this slide counter 706 took the form of "SLIDE XX OF XX", where the first number refers to the sequence number of the presentation slide then displayed and the second number refers to the total number of slides in the slide deck.

It is noted that the presentation production system also includes a feature whereby "double-clicking" on a thumbnail of a slide displayed in the presentation slide preview sector launches the presentation slide creation program that was used to create it (assuming the program resides on or is accessible by the host computer), and opens the particular presentation slide file containing the displayed slide. In this way the user can readily edit the presentation slides. Closing the presentation slide creation program returns the user to the presentation production system's tool window. Preferably the playback of the master track video or audio program is paused whenever the user launches the presentation slide creation program to edit the slides. The presentation slide creation program's graphic user interface window or windows could also be displayed within the aforementioned working area, rather than in a window that overlies the presentation tool window. This creates the impression for the user of never having to leave the presentation tool and makes all the information displayed in the presentation tool window available to the user while editing the slides.

2.5 The Presentation Properties Sector

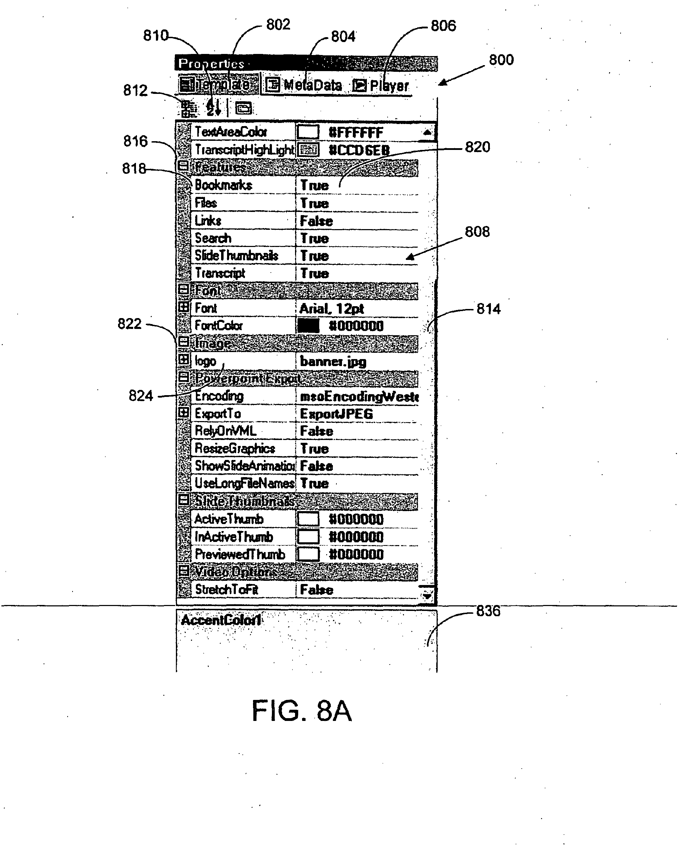

When the selected template files are downloaded and the presentation tool window is opened, the window is populated with that template's default information, including information about the template's features, color settings, export options, build options, and video/audio options. The presentation properties sector provides listings of these settings and option in series of property grids, and allows the user to modify them so as to customize the presentation. Referring to the enlarged view of Fig. 8A, the presentation properties sector 800 of the presentation tool window has three tabs at the top-namely a template tab 802, a metadata tab 804 and a player tab 806. When one of these tabs is selected, the related settings and options associated with that tab are displayed in the properties display area 808 below. The settings and options associated with each of these tabs will now be described in the subsections to follow.

2.5.1 Template Editor Property Grid

The template editor property grid is accessed by selecting the aforementioned template tab. The template editor property grid is a display of the selected template's customizable attributes. The grid has two columns. The first column of each attribute line lists the name of the attribute, while the second column lists the current setting associated with that attribute. For example, consider the example template editor property grid shown in Fig. 8A. Under the "Features" heading 816, the name of the first-listed attribute is "Bookmarks" 818 and appears in the first column of the attribute line. The current setting associated with the "Bookmarks" attribute 818 is seen in the second column of the attribute line. This current setting 820 is "True" indicating that the bookmarks feature is active in the selected template. This bookmarks feature is described in the aforementioned co-pending application.

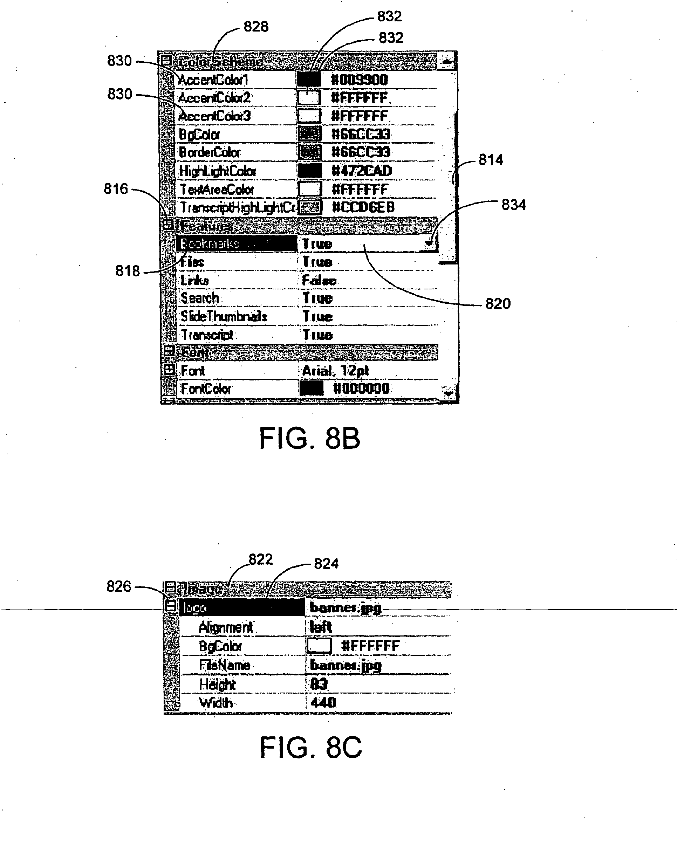

The attributes list in the template editor property grid can be presented in two different formats. One of these formats, which is not shown in Fig. 8A, is initiated by selecting the "AZ" logo 810 located just above the properties display area 808. This format organizes the attributes in alphabetical order. The second format is the expandable table format. The expandable table format is the default format, and can be reinitiated if the list is in the alphabetical format by selecting the categorized table icon 812. This is also the format depicted in Fig. 8A. In the expandable table format, the attributes are group together under expandable category headings. If the category is already expanded to show all its attribute lines, a boxed minus sign appears adjacent the category heading. Selecting this boxed minus sign collapses the category such that only the category title is displayed, along with a boxed plus sign which can be selected to expand the category. This contraction and expansion feature is useful in that categories the user is not interested in, or which have already been customized, can be collapsed so that more of the remaining expanded categories can be displayed in the properties display area 808. For example, it can be seen in Fig 8A, that a portion of the list above the "Features" heading 816 is out of view. Granted, the user can employ the scroll bar 814 located at the side of the properties display area 808 to bring the missing attributes in to view, but then the bottom of the list could not be seen as depicted in Fig. 8B where only a portion of the top of the attributes list is in view.

Some of the attributes lines have the boxed plus sign displayed adjacent thereto. This indicates that there is a list of sub-attributes associated with the attribute. To view these additional sub-attributes, the user "clicks on" the boxed plus sign, and the table expands to include the aforementioned sub-attributes. This is shown in the enlarged view of the image heading 822, shown in Fig, 8C. As can be seen, the logo attribute 824, listed under the image heading 822 is expanded (as compared to the "Image" heading shown in Fig. 8A), and includes several sub-attributes, along with their current settings. When expanded an attribute line will have a boxed minus sign displayed next to it, such as the one 826 shown adjacent the "logo" attribute 824 in Fig. 8C. The user selects this boxed minus sign to collapse the list of sub-attributes once he or she is finished viewing or modifying them.

It is also noted that the template editor property grid can be a master list of all the templates attributes, whether editable or not, with the attributes that are not editable by the user being "grayed out". Alternately, the template editor property grid could just list those attributes that are editable by the user.

The user is able to change editable attributes in the attribute list in a variety of ways depending on the type of attribute. For example, in tested versions of the presentation production system, any attribute associated with the color of a portion of the presentation window included a small rectangular color patch in the current setting column (along with a standard color code) depicting the current color setting. This can be seen in Fig. 8B where the attributes 830 listed under the color scheme heading 828 each have such a color patch 832 shown in the current setting column of the attribute line. When the user selects such an attribute, a pop-up window appears over the presentation tool window showing a color pallet (i.e., typically a grid of color patches each showing a different color). The user can then select a color from the color pallet and the selected color becomes the current setting for the attribute under consideration. Upon selection of a color from the pallet, the pop-up window closes and the selected color appears in the form of the aforementioned color patch in the current setting column of the attribute.

Another way a user changes some of the editable attributes in the template editor property grid, is to first select the attribute that it is desired to change. This causes the column of the attribute line containing the name of the selected attribute to become highlighted, as shown in Fig. 8B where the "Bookmarks" attribute 818 has been selected. In addition to highlighting the attribute name, a down arrow 834 also appear at one end of the column of the attribute line containing the attribute's current setting. The user selects the down arrow 834, and a drop-down list appears over the presentation tool window. This drop-down list is a list of optional settings that the user can choose from to customize the elected attribute. To effect a change in the current setting, the user simply selects the desired option from the drop-down list and closes the list by selecting the down arrow once again. It is noted that when a user selects an attribute, a description of that attribute may appear in the attribute description area 836 just below the properties display area 808.

Examples of the type of attributes that can be modified using the template editor property grid include the templates color scheme, layout features, fonts, images, presentation slide export and thumbnail options, as well as video and audio playback options. Figs. 8A-C show some of the specific attributes that can be associated with the foregoing general attribute categories, depending on the particulars of the selected template.

2.5.2 <u>MetaData Property Grid</u>

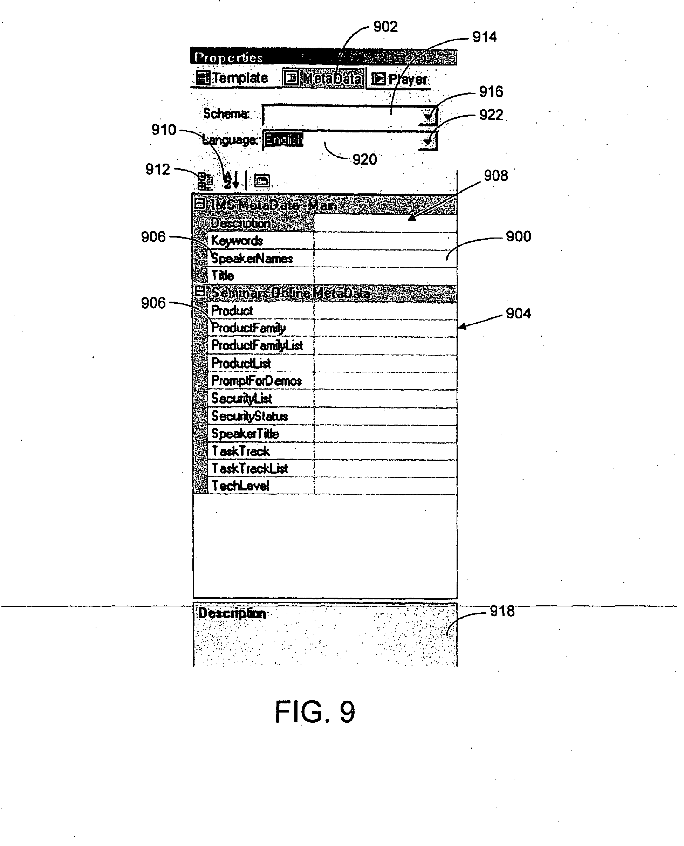

Referring now to Fig. 9, the metadata property grid 900 is accessed by selecting the aforementioned metadata tab 902. This grid 900 is a display of informational items that are embedded into the presentation data file that defines the presentation being created. This information can be parsed from the file and used in a variety of ways. For example, the metadata can include keywords to assist a search engine in finding the file. Another example is that an enterprise's intranet regulations may require certain information about any file transferred or made available on the network include certain information about the file, such as the author, its origin, etc. In the present case, the required data is simply included in the presentation file's metadata so as to be available for inspection.

The metadata is added to the presentation file by the user entering the data into the appropriate column of the metadata property grid 900, which is displayed in the display area 904 of the presentation properties sector. The grid 900 itself is organized much like the template editor property grid in that metadata titles 906 appear in the first column of each data line and the data associated with the title appears in the second column 908 of the line. The metadata titles 906 can be displayed in alphabetical order by selecting the "AZ" button 910, or as a categorized list with category headers in an expandable table format. As before, the categories of the expandable table can be expanded or collapsed by selecting an adjacently displayed boxed plus or minus sign, respectively. Also as before, while the table format is the default format for the metadata property grid, a categorized table icon 912 is included to switch back from the alphabetical listing mode.

The particular metadata titles that are included in the metadata list are part of the template data that is populated into the metadata property grid when the presentation tool window is first opened. This default metadata listing, which appears in the grid when the user selects the metadata tab 902, can be the only data list associated with the selected template, or it can be one among multiple listings. If there are more than one set of metadata listings provided in the template data, the alternate sets can be accessed via the schema field 914. The schema field 914 displays the title given to the metadata listing that is currently active in the metadata property grid, unless there is only one such listing and then the schema line can optionally be left blank, as it is in Fig. 9. If there are more than one metadata listings available in the selected template, then the user can change from the default listing to another using the schema field 914. Specifically, the schema field 914 includes a drop-down list arrow 916 at one end. The user selects this arrow 916 and a drop-down list appears over the presentation tool window with a list of available metadata schemas. The user can select one of schemas, and upon closing the drop-down window, the metadata titles associated with the selected schema appear in the metadata property grid 900.

In addition to the metadata titles 906, the template data can include default data selections (not shown) associated with a metadata topic. This default data is populated into the grid when the grid is opened, just like the metadata titles. Thus, the default data selection will appear in the second column of a metadata line. The default selection may be the only choice for a particular metadata item, or it can be one of many pre-defined choices. If the default selection is the only pre-defined choice, the user can change it by selecting the column containing the default choice and manually entering in the desired data, e.g., by using a keyboard connected to the host computer. If multiple pre-defined choices are available, the data column of a metadata line can include a drop-down list arrow (not shown), which the user selects to open a drop-down list of the available choices. The user can then select one of the choices and upon closing the drop-down list, the selected data will appear in the data column of the metadata line.

In cases where there is no pre-defined data selection for a particular metadata item, the user enters the called-for data by selecting the empty column adjacent a metadata title in the grid. A text cursor will appear in the column and the user enters the required data, e.g., using a keyboard.

It is noted that when a user selects a metadata item from the displayed list, a description of that item may appear in the metadata description area 918 located just below the display area 904.

It is also possible that the user would want metadata included in the presentation data file defining the presentation being created that is in a language other than English, or in more than one language. This is possible by employing the language field 920, which is located just below the schema field 914. The template data can include a default language choice. The chosen language appears in the language field 920. For example, in the example metadata grid depicted in Fig. 9, the language field 920 indicates that the chosen language for the metadata is English. If the user wants to specify metadata in a language other than the default language, he or she selects the drop-down list arrow 922 residing at the side of the language field 920. The user selects the arrow 922 to open a drop-down list of the available language choices. The user can then select one of the choices and upon closing the drop-down list, the selected language will appear in the language field 920. The user then enters the metadata as described previously, except in the selected language. The metadata portion of the presentation data file incorporates metadata of different languages by including a language designator key with the data.

2.5.3 <u>Player Property Grid</u>

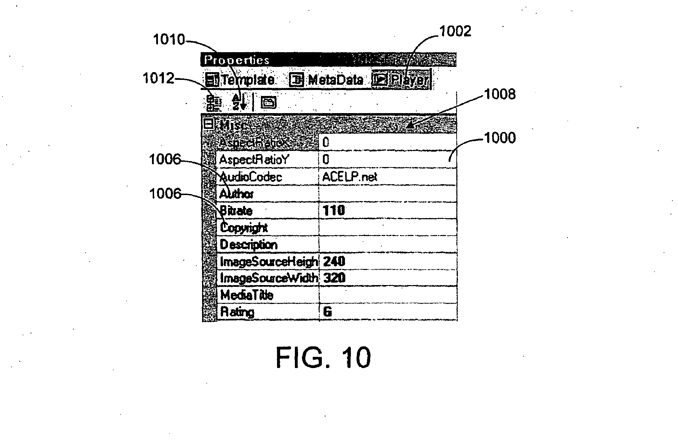

Referring now to Fig. 10, the player property grid 1000 is accessed by selecting the aforementioned player tab 1002. This grid 1000 is a display of both informational and editable items associated with the master track video or audio media file discussed previously. This data is ultimately stored in both the presentation data file and in the media file.

The grid 1000 is organized like the template editor and metadata property grids. Specifically, labels 1006 appear in the first column of each data line and the data associated with the label appears in the second column 1008 of the line. The labels 1006 can be displayed in alphabetical order by selecting the "AZ" button 1010, or as a categorized list with category headers in an expandable table format that possesses the capability to expand or collapses using the previously-described boxed plus or minus signs. Also as before, while the table format is the default format for the player property grid, a categorized table button 1012 is included to switch back from the alphabetical listing mode.

The labels included in the player property grid come from the template data that is populated into the grid when the presentation tool window is first opened. In addition, the informational data items associated with those player attributes that are not editable are shown in the grid (in "grayed out" form), as are any default data selections associated with a player attribute that is editable. The default selections may be the only choice for a particular data item, or it can be one of many pre-defined choices. If the default selection is the only pre-defined choice, the user can change it by selecting the column 1008 containing the default choice and manually entering in the desired data, e.g., by using a keyboard connected to the host computer. If multiple pre-defined choices are available, the data column 1008 of a metadata line can include a drop-down list arrow (not shown), which the user selects to open a drop-down list of the available choices. The user can then select one of the choices and upon closing the drop-down list, the selected data will appear in the data column 1008 of the player attribute line. In cases where there is no pre-defined data selection for a particular data item, the user can enter the called-for data by selecting the empty column 1008 adjacent a metadata title in the grid. A text cursor will appear in the column 1008 and the user enters the required data, e.g., using a keyboard.

In general, the player property grid includes editable attributes that allow a user to adjust the playback size, dimensions and quality of the master track. In addition, data lines allowing the user to enter the author's name, a description and title of the video or audio program, its copyright and its rating, can be included as shown in Fig. 10.

2.6 Data Entry Grids

The "Data Entry" grids allow the user to enter scheduling information into the presentation production system's presentation data file and the master track media file to drive the timeline of the presentation. The following sections will described each of these scheduling grids and how they are used.

2.6.1 The Scripts Grid

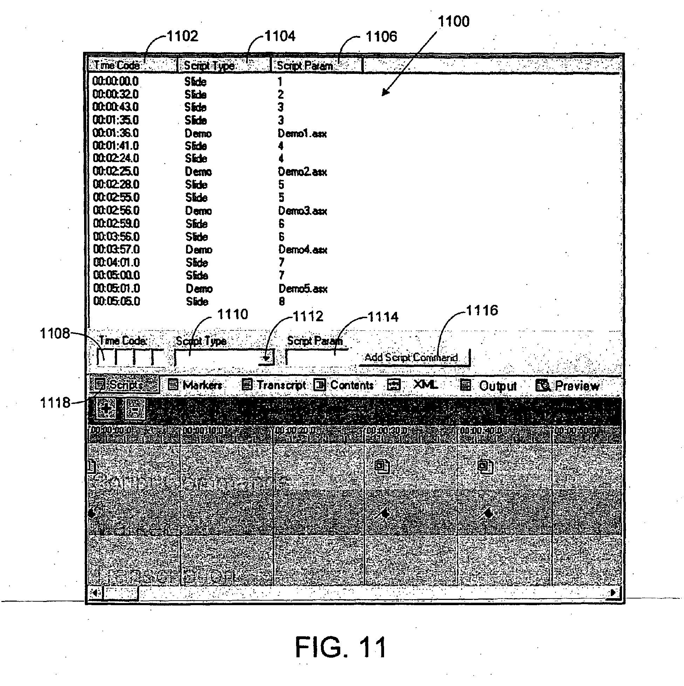

As soon the user has entered a video or audio program that is designated as the master track, the aforementioned work sector changes. Specifically, the work sector, which is initially blank, displays the "Scripts" grid. Referring to Fig. 11, the scripts grid 1100 is essentially a scheduling table where the user enters events (sometimes referred to as script commands) that will be triggered during the playback of the presentation. Every line in the table corresponds to a scheduled event in reference to the master track's timeline. There are three columns in each event line. The first column of each event line, which is under the header 1102 titled "Time Code", specifies the time an event is to take place. The event lines are sorted in order of the time code starting with the earliest event scheduled. The specified time corresponds to the elapse time of the master track. The second column of each event line, which is under the header 1104 titled "Script Type", specifies the type of event that is to occur. The third column is under the header 1106 titled "Script Param", which is short for script parameter. The script parameter is a variable field that can contain any UNICODE data that should be passed to the template with the script command to implement the associated event. Typically, this will be a reference to the specific resource desired, such as a presentation slide number that is to be displayed, a file name of a file that is to be opened, or the address of a site that is to be contacted.

As for the script types, these can include events such as changing the presentation slide displayed (which in tested versions of the presentation production system were called out as script type "Slide" in the grid), launching a demonstration video or audio program (which in tested versions of the system were called out as script type "Demo" in the grid), and various other custom code call events (which in tested versions of the system were called out as script type "Script" in the grid). These custom events can include opening a document, HTML or animation file (e.g., pausing the presentation and opening the designated file in a separate window), opening a URL (e.g., opening a web browser to the URL which in turn pauses the presentation and opens a separate browser window), accessing a web service (e.g., contacts a web service that logs the status of the presentation to provide statistical data to the presentation's creator on it use), opening another presentation, stopping the presentation, among others. In the case of a custom event, it is noted that the selected template must be designed to respond to the event and recognize the script type command and associated script parameter.

In operation, the presentation receives the "Script Type" and the "Script Param" at a specified time code corresponding to a point in the timeline of the playback of the presentation. The presentation then responds accordingly by changing the presentation slide displayed, or by launching a demonstration video, and so on.

The user can enter scheduling information into the Scripts grid in a variety of ways. One of these ways is via a manual entry process. This process begins with the user starting the master track video or audio program. The program is started using the aforementioned player control buttons of the video preview sector. When the master track video or audio program reaches a point where the user wants to insert an event of some type, the user pauses the program using the pause button of the video preview sector (or by some other appropriate method such as depressing a so-called hot key on a keyboard connected to the host computer that has been configured to pause the program). At this point, the user enters the script type, script parameter, and optionally the time code. The presentation production system can be configured to enter the time code automatically. If so, then the time code appears in the time code field 1108. If the time code is not set to be entered automatically, the user enters it in the time code field (e.g., by using a keyboard connected to the host computer). The user can read the time code that needs to be entered from the elapse time counter in the video preview sector. In either case, the time code corresponds the elapse time of the master track program and takes the form of "XX:XX:XX:X" referring to the hours, minutes, seconds and tenths of a second, respectively. The user enters the script type either by entering it manually in the script type field 1110 (e.g., using the aforementioned keyboard), or by selecting the drop-down list arrow 1112 at the side of the script type field and then selecting the desired script type from the drop-down list that appears. Upon selecting the desired script type, the drop-down list disappears and the selected script type appears in the script type field 1110. Finally, the user enters the appropriate script parameter in the script param field 1114, and then selects the "Add Script Command" button 1116. Upon selecting the button 1116, the new script command is entered and the entered data appears as a new event line in the scripts grid 1100 in the appropriate place.

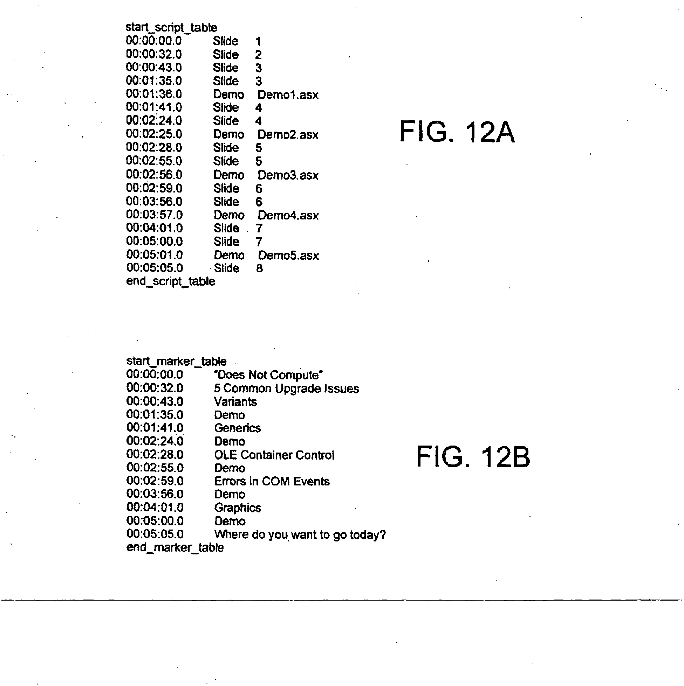

An alternate way for the user to enter scheduling information of the type described above is by importing a pre-defined script. In its simplest form the pre-defined script is simply a text file (i.e., .txt file) formatted in the same way as the scripts grid with separate event lines each made up of a time code designation, script type and script parameter. An example of such a script file is shown in Fig. 12A. To import the pre-defined script file, the user selects the File menu button of the presentation tool window (see 320 of Fig. 3) which results in the appearance of a drop-down list of commands. The user selects the "Import" command from the list, which in turn causes a sub-list to appear that includes a "Script File" element. The user selects the "Script File" element and a standard open file window appears. The user employs this window to find and select the text file containing the pre-defined script. The list is then imported and the script command data appears in the scripts grid.

In some programs used to create presentation slides, timing data can be specified. This timing data is then included in the presentation slide file and can be parsed for use by the presentation production system, assuming the timing data is in the proper format as described above and relates to the elapse time of the master track program. Should this be the case, the system can be readily configured to recognize the existence of the timing data in the presentation slide file when it is entered and to automatically generate script commands and enter the data in the scripts grid by listing the time code and slide number along with identifying the event as a slide change (i.e., specifying the script type as Slide).

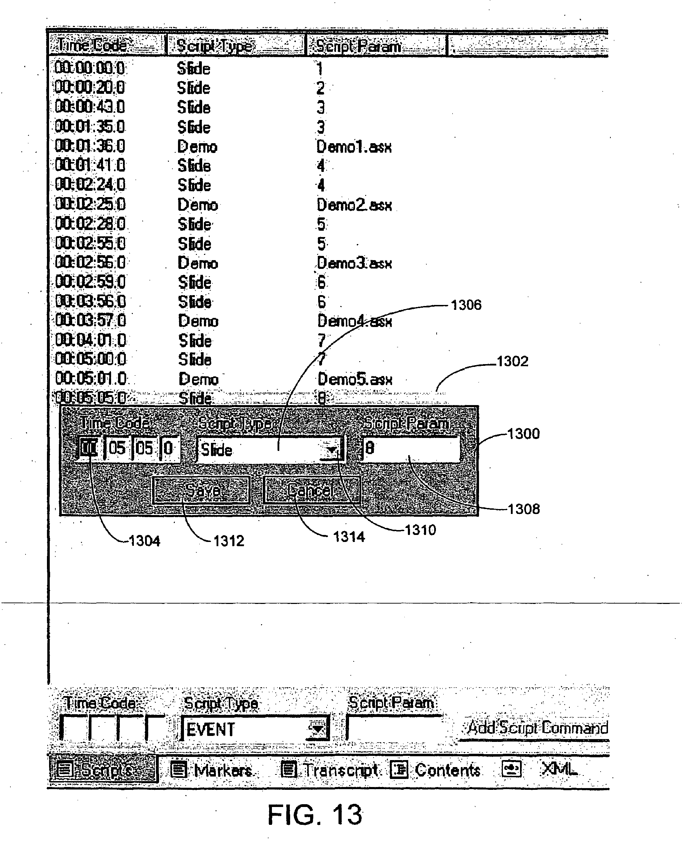

Once one or more event lines are entered and displayed in the scripts grid, it is possible to edit the schedule data. To edit a previously entered event line, the user selects the line in the scripts grid (e.g., via a double-click maneuver). This action results in the appearance of a pop-up window 1300, as shown in Fig. 13. As can be seen in Fig. 13, the scheduling information contained in the selected event line 1302, appears in the appropriate places in the pop-up window 1300. Specifically, the time code appears in the time code field 1304, the script type appears in the Script Type field 1306, and the script parameter appears in the script param field 1308. The user can change any of this scheduling information by selecting and overtyping the existing data. In addition, the script type field 1306 has a drop-down list arrow 1310 that the user can select and then choose a script type from the resulting drop-down list. Once the desired changes have been made to the scheduling information in the pop-up window 1300, the user selects the save button 1312 to implement the changes in the script grid. It is also possible to delete an event line by selecting it in the scripts grid and then entering a delete command (such as by using the delete key on a keyboard of the host computer). If, however, the user decides not to make any changes to the selected event line, he or she can select the cancel button 1314. In either case, the pop-up window 1300 disappears.

It is noted that while the scripts grid is automatically placed in the work sector when the master track is designated, it can also be called up by selecting the scripts tab 1118 shown in Fig. 11. This is useful when the user is working in one of the other data entry grids, and wishes to return to the scripts grid to view or edit the scheduled events.

2.6.2 The Markers Grid

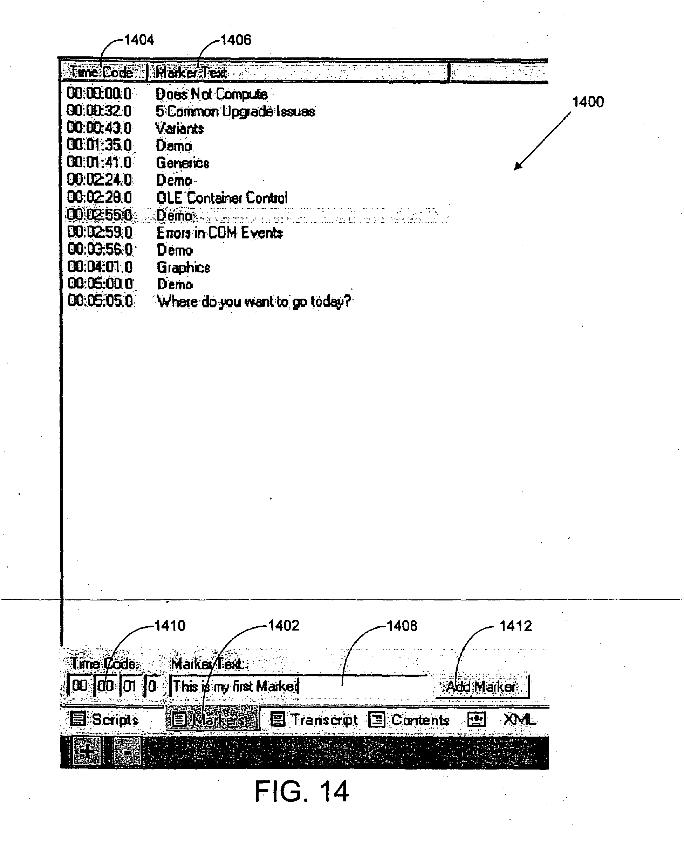

The markers grid is essentially used to create and edit a table of contents for the presentation. In this way, major divisions or events along the timeline can be titled for fast navigation and indexing to that time code. Typical presentations include a marker for each major slide change, or change in topic within the presentation. In addition, subtopics can be marked and arranged into hierarchies under the contents tab, as will be discussed shortly. Referring to Fig. 14, the markers grid 1400 is accessed by selecting the marker tab 1402. The grid 1400 is simply a table of marker entries each having a titled time code column 1404 and a titled marker text column 1406. The marker entries are created and edited in the same ways as the event lines in the scripts grid.

Specifically, the user can enter the marker entries manually by pausing the master track program at the point where he or she wants to insert a marker, and then entering the marker text into the marker text field 1408. In addition, if the time code is not automatically entered, the user enters it into the time code field 1410. The user then selects the "Add Marker" button 1412. Upon selecting this button 1412, the data is entered and appears as a new marker entry in the markers grid 1400 in the appropriate time-ordered place.

Alternately, the user can import the marker information as a pre-defined list. As with the pre-defined script list, the marker list can be a text file (i.e., .txt file) formatted in the same way as the markers grid with separate marker entries each made up of a time code designation and marker text. An example of such a contents marker file is shown in Fig. 12B. To import the pre-defined markers file, the user selects the File menu button of the presentation tool window (see 320 of Fig. 3) and then selects the "Import" command. The user next selects the "Marker File" element from the sub-list display, and uses the resulting open file window to find and select the text file containing the pre-defined marker list. The list is then imported and appears in the markers grid.

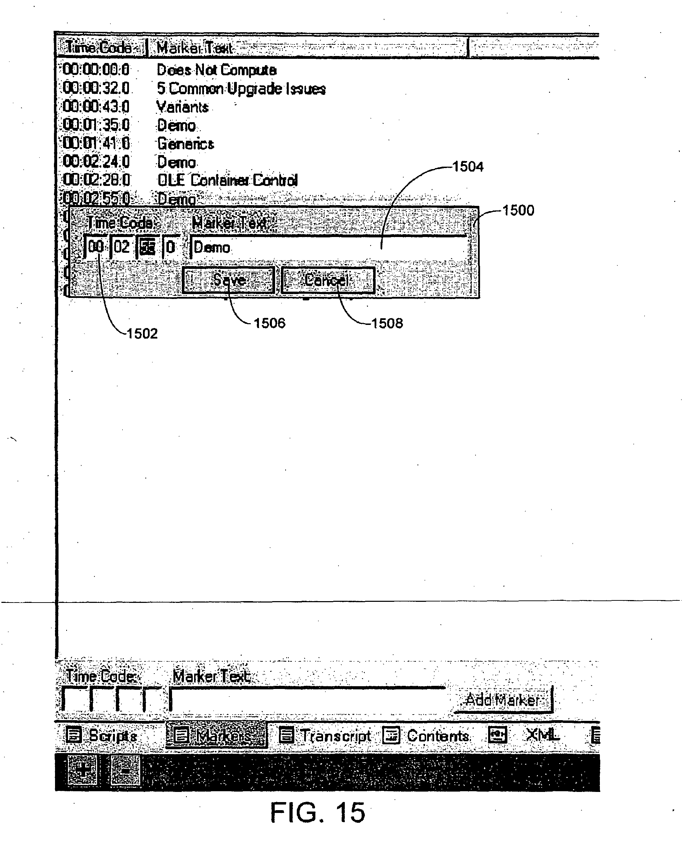

The marker entries are edited as with the event lines in the Scripts grid by first selecting the line in the marker grid. Referring now to Fig. 15, a marker entry pop-up window 1500 appears with the marker data of the selected entry appearing in the appropriate places in the window 1500. Specifically, the time code appears in the time code field 1502, and the marker text appears in the marker text field 1504. The user can then change the marker data by selecting and overtyping the existing data. Once the desired changes have been made, the user selects the save button 1506 to implement the changes. It is also possible to delete a marker entry by selecting it in the markers grid and then entering a delete command (such as by using the delete key on a keyboard of the host computer). Or, if the user decides not to make any changes, he or she can select the cancel button 1508. In either case, the pop-up window 1500 disappears.

2.6.3 <u>The Transcription Grid</u>

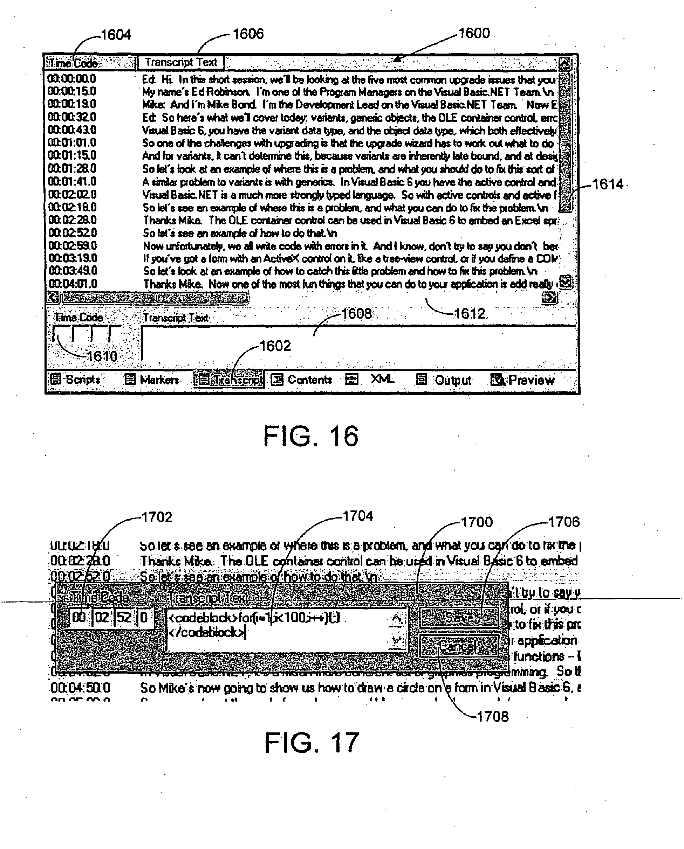

The transcription grid is used to enter and edit a transcript of the audio portion of the master track for optional display during the presentation. Further, alternate transcriptions in different languages can be entered using the transcription grid. Referring to Fig. 16, the transcription grid 1600 is accessed by selecting the transcription tab 1602. The grid 1600 is a table of transcription segments displayed in a column titled 'Transcription Text" 1606 with an adjacent time code listed in a "Time Code" column 1604. The transcription segments can be of any length, such as a phrase, sentence, block of text, paragraph, or even a large section of text.

The transcript entries can be entered and edited manually as follows. The user first pauses the master track program at the point where he or she wants to insert a transcription segment. Next, the user employs a language field (not shown) to specify the language of the transcription text being entered. The presentation production system can store multiple language transcriptions, indexed by a language key, into the final presentation data file. The language field works in the same way as that employed in the previously described metadata property grid. Specifically, the default language is English. However, the user can select an alternate language designation by selecting a drop-down list arrow located at the end of the language field to reveal a list of languages to choose from. The user selects the desired language and the drop-down list closes with the selected language designation being displayed in the Language field. After the language has been designated by either entering a new language designation or maintaining the default English language designation, the user, enters the text of the transcription segment into the transcription text field 1608. In addition, if the time code is not automatically entered, the user enters it into the time code field 1610. The user then selects the "Add Text" button (not shown), which causes the data to be entered and appear as a new transcript entry in the transcription grid 1600 in the appropriate time-ordered place.

It is noted that in order to show as many of the individual transcript entries as possible in the available vertical space in the work sector of the presentation tool window, the text of the segment can be extended horizontally. The result is, however, that much of the text cannot be seen, as well as the "Add Text" button, in the initial default view of the transcript grid (as shown in Fig. 16). Accordingly, a scroll bar 1612 is provided to allow the user to bring the hidden text into view. A similar scroll bar 1614 is provided at one end of the work sector to allow the user to bring into view transcript entries that are outside the viewing area in the work sector.

An alternate and perhaps more practical method of entering the transcript data because of its speed involves importing a previously compiled text-based transcription file. Any human-readable Unicode formatted file type could the used as the transcription file, as long as it is laid out as discrete entries each having a time code and associated transcription text. To import a transcription file, the user first uses the aforementioned language field (not shown) to specify the language of the transcription text being imported. After the language has been designated by either entering a new language designation or maintaining the default English language designation, the user selects the file menu button of the presentation tool window (see 320 of Fig. 3) and then selects the "Import" command. The user next selects the "Transcription File" element from the sub-list display, and uses the resulting Open File window to find and select the file containing the transcription entries. The transcription entries are then parsed from the imported file and become part of the presentation production system file. In addition, the transcription entries are displayed in the transcription grid.

The transcription entries are edited in the same way as the event lines in the scripts grid and the marker entries in the marker grid—namely by first selecting the entry in the transcription grid that is to be modified. Referring now to Fig. 17, a transcription entry pop-up window 1700 appears with the transcription text and time code of the selected entry appearing in the appropriate places in the window 1700. Specifically, the time code appears in the time code field 1702, and the transcription text appears in the transcription text field 1704. The user can then change the transcription entry data by selecting and overtyping the existing data. Once the desired changes have been made, the user selects the save button 1706 to implement the changes in the transcription grid. It is also possible to delete a transcription entry by selecting it in the transcription grid and then entering a delete command (such as by using the delete key on a keyboard of the host computer). However, if the user decides not to make any changes, he or she selects the cancel button 1708.

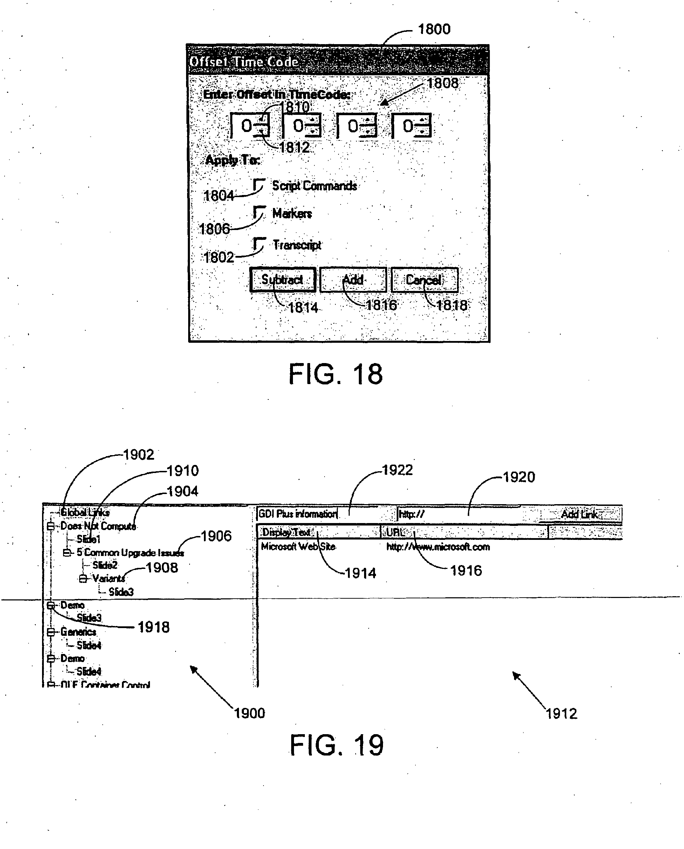

The transcription grid also includes two additional functions. The first involves correcting for an offset time code. Sometimes when a transcription file is employed to enter the transcription data, the time codes specified in the file will be offset by some amount of time from the actual timeline of the presentation's master track program. This is often the case when the transcript file is created by logging the entries from an audio tape. An offset condition may also occur in imported scripts and marker entry files (although typically less often). To synchronize the transcript (or script or table of contents) to the master track program, an offset time code correction module is included in the presentation production system, This module is initiated by the user selecting the Tools menu button of the presentation tool window (see 322 of Fig. 3) and then selecting the "Offset Timecode" command. This results in the offset time code window being displayed over a portion of the presentation tool window. The offsef time code window 1800 is shown in Fig. 18. To use the window 1800, the user selects the blank "Apply To:" square next to the type of entry involved. Thus, if the imported transcript file's time codes are skewed, the user would select the "Transcript" square 1802. Likewise, if it is imported script commands or marker entries that are skewed, the user would select either the "Scripts Command" square 1804 or the "Markers" square 1806. A check mark will appear in the selected "Apply To:" square. Next, the user enters the amount of time the time codes specified in the offending imported file are offset from the actual timeline of the master track program. This offset can be determined by viewing the master track program and comparing its elapse time counter to the time codes listed in the work sector for the script, markers or transcript as the case may be. Alternately, in the case of a time-skewed transcript file, it is noted that a transcript of a presentation will typically start at time zero (i.e., time code 00:00:00:0). If the first transcript entry in the imported transcript file does not start at time zero, then the amount of the offset is simply the time code that is listed for this first entry. Further, the presentation production system can be configured to alert a user that the first entry in an imported transcript file does not begin at time zero and offer to correct the offset automatically.

Assuming that a time code offset condition is not corrected automatically, once the offset time is determined, the user enters it into the "Enter Offset in TimeCode" field 1808 of the Offset Time Code window 1800. This is accomplished via a select and overtype method, or by using the standard increase/decrease arrows 1810, 1812 included in each segment of the field 1808. It is noted that the segments of the "Enter Offset in TimeCode" field 1808 correspond to the hour/minute/second/tenths of second time code format (i.e., XX:XX:XX:X). The user then specifies whether the entered offset is to be subtracted or added to the time codes listed in the applicable imported file before being saved into the presentation data file and displayed in the work sector. This is done by selecting either the "Subtract" button 1814 or the "Add" button 1816. Upon selection of the "Subtract" or "Add" buttons 1814, 1816, the Offset Time Code window closes and the offsets are implemented. It is noted that the user can also exit the offset time code window without implementing an offset by selecting the "Cancel" button 1818.

The second of the additional functions associated with the Transcription grid involves customizing how the transcript data is displayed in the presentation. Generally, a user can tag the transcript data with HTML or XML tags to modify the display of the information in the finalized presentation. For example, when an XML file is used as the presentation data file as in tested versions of the present system, a user can tag a transcript line with a custom XML tag like:

```
<codeblock> for(int x = 0; x < 10; x++) </codeblock>.
```

Upon displaying the transcript in the finalized presentation, the presentation system will parse this line of a transcript segment and alter the appearance of that segment of the transcript within the transcription window in accordance with the tag instructions.

2.6.4　The Contents/Links Editor

The contents/links editor is used for viewing and editing the hierarchy of a table of contents of the presentation, as well for adding links at a global, marker or presentation slide level. Referring to Fig. 3 once again, the contents/links editor is accessed by selecting the contents tab 324. Upon selecting the contents tab 324, the aforementioned work sector 310 displays a two-part editor view. This two-part editor view is depicted in Fig. 19. As can be seen, the left side of the view depicts a hierarchical table of contents tree 1900 showing each topic and subtopic of the presentation and the presentations slides that are displayed while the particular topic or subtopic is being presented. The topics and subtopics are the markers entered in the markers grid that were discussed previously. In addition, there is a "Global-Links" line 1902 af the top of the tree that will be discussed shortly. A scroll bar (not shown) is provided on one side of the tree when the tree is too long to be viewed in its entirety in the vertical space allocated to the work sector. The user can use this scroll bar to view portions of the tree that are out of view.

One purpose of the table of contents tree 1900 is to provide a graphical representation of the flow of the presentation, and especially the hierarchy of the topics being discussed. When the markers are entered in the markers grid, there is no provision for specifying their hierarchy. Thus, when the table of contents tree 1900 is first viewed, all the topics are depicted as having equal status. In order to make the tree 1900 truly representative of the hierarchical flow of the presentation, it is necessary for the user to edit the tree. This is accomplished by selecting and gaining access to an action list that includes commands to increase or decrease the indent of a marker in the tree 1900. For example, in tested versions of the presentation production system, a user placed the screen cursor over the marker whose hierarchy was to be changes and then performed a "right-click" to make the action list appear in a pop-up window. The user then selected either the increase indent or decrease indent command to change the hierarchy of the selected marker in the tree. Thus, referring to Fig. 19, the markers "Does Not Compute" 1904, "5 Common Upgrade Issues" 1906, and "Variants" 1908 were originally all listed at the same level as the "Does Not Compute" 1904. The user increased the indent of the "5 Common Upgrade Issues" 1906 marker one level to nest it in the subtopic level shown in Fig. 19. Similarly, the user increased the indent of the "Variants" 1908 marker two levels to nest it in the sub-subtopic level shown in the figure. Note that the presentation slides that are displayed during the presentation of these topics remain associated with the markers in the tree 1900, even when the hierarchy of the tree is changed. The tree 1900 also has an expandable format. Specifically, if a marker having slides associated therewith is shown with the slide labels, a boxed minus sign 1918 appears adjacent the marker label. Selecting this boxed minus sign 1918 collapses the branch such that only the marker label is displayed, along with a boxed plus sign (not shown) which can be selected to expand the branch once again.

The second purpose of the table of contents tree is to aid the user in establishing the links that will be listed in a links sector of the viewer's presentation window, and when. To add links to the presentation, the user selects either the global links node 1902, one of the marker nodes (e.g., marker 1904), or a slide node (e.g., slide 1910). If a link is added to the global node 1902, the link will be displayed throughout the entire presentation. If the link is added to a marker node, it will be displayed in the presentation only while the topic associated with the marker is being presented. And finally, if a link is added to a slide node, it will be displayed in the presentation only during the time that the slide is displayed.

To view existing links and add new ones to one of the tree nodes, the user employs the links grid 1912 on the left side of the work sector. To use the grid 1912, the user first selects the node in the table of contents tree 1900 that he or she want to associate with a link as discussed above. This causes a list of the links currently associated with the selected node to appear in the Links grid 1912. The link is identified by a link name listed under the column entitled "Display Text" 1914. This is the name that is displayed in the link sector of the viewer's presentation window during the portion of the presentation corresponding to the selected node. In addition, a link is identified in the links grid by a URL address listed under the column entitled "URL" 1916. To add a link to the selected node, the user enters the name of the link in the display text field 1922 located above the display text column 1914, and enters the URL address of the link in the URL field 1920 located above the URL column 1916. Once the link name and address are entered, the user selects an "Add Link" button (not shown). This associates the link with the selected node and causes the link name to be displayed in the presentation window during the appropriate part of the presentation. In addition, the newly entered link will be displayed in the list of links associated with the selected node in the links grid 1912.

The links can also be edited. To accomplish this task, the user selects the global links node 1902, a marker nodes or a slide node in the table of contents tree 1900. This results in the list of existing links associated with the selected node being displayed in the links grid 1912. The user then selects the link he or she wishes to change. A link pop-up window (not shown) appears with the name and URL of the selected link appearing in the appropriate places. Specifically, the link's name appears in a display text field, and the link's URL appears in the URL field. The user can then change the link data by selecting and overtyping the existing data. Once the desired changes have been made, the user selects a save button to implement the changes in the links grid. It is also possible to delete a link entry by selecting it in the links grid and then entering a delete command (such as by using the delete key on a keyboard of the host computer). However, if the user decides not to make any changes, he or she selects a cancel button.

### 2.6.5 The Presentation Data File Preview Pane

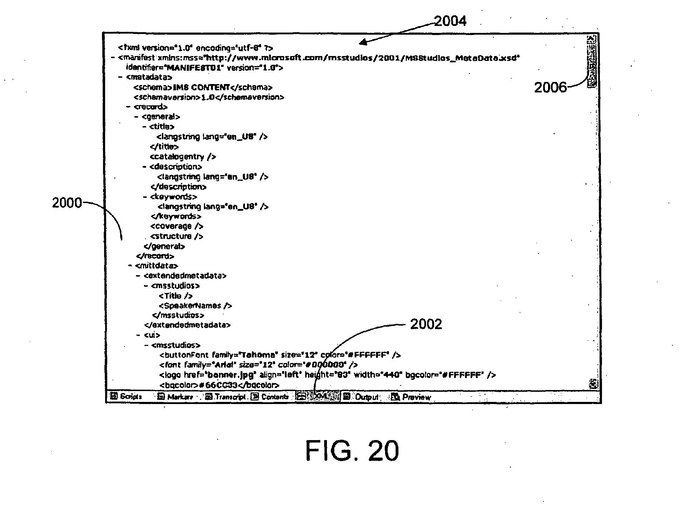

The presentation data file preview pane provides a listing to date of the underlying presentation data file that is being generated as the user creates a presentation with the present system. Referring to Fig. 20, the presentation data file preview pane 2000 is accessed by selecting the presentation data file tab 2002. It is noted that since the presentation data file in tested versions of the present system takes the form of a XML file, the tab 2002 in Fig. 20 is labeled "XML". In response, the presentation production system displays the current listing 2004 of the presentation data file in the aforementioned work sector. A scroll bar 2006 is provided at one side of the work sector to allow the user to scroll through the entire file, which typically will be too long to display in its entirety within the vertical space allotted the work sector.

### 2.6.6 The Output Panel

As will be discussed in more detail later, a project builder module of the presentation production system takes all the data input by the user via the foregoing user interfaces and build a presentation package that can be run by the presentation viewer. The project builder module is invoked by the user selecting the build menu button of the presentation tool window (see 326 of Fig. 3) and then selecting either the "Build Project" command or the "Rebuild Project" command. The "Build Project" command is used to build new presentation packages and to re-build previous built and saved presentation packages that only have changes that can be made to the existing project file, such as changes in the template attributes or the events schedule. However, more extensive changes to an existing presentation package, particularly the introduction of a new presentation slide deck, should be accomplished using the "Rebuild Project" command. Essentially, the "Rebuild Project" command wipes out the existing project directory for the presentation package and creates a new one.

Regardless of which build command is chosen, an output panel is automatically displayed in the work sector. The output panel details build information and the status of each step in the build process. In addition, any errors encountered in the build process are reported for troubleshooting purposes.

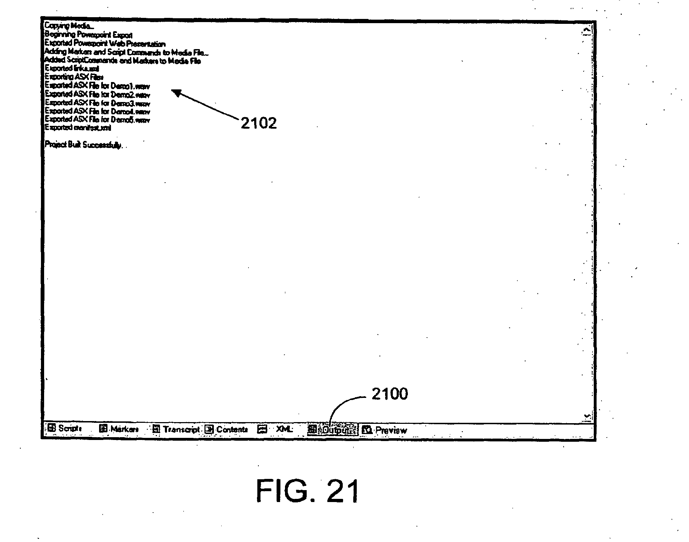

It is noted that the output panel can also be accessed when the work area is being used for another function by the user selecting the output tab 2100, as shown in Fig. 21. If the foregoing build process has not yet been attempted, the work sector of the presentation tool window will be blank when the output tab 2100 is selected. However, selecting the output tab subsequent to a build, results in the build and status information 2102 being displayed in the work sector, as depicted in Fig. 21.

2.6.7 The Preview Display

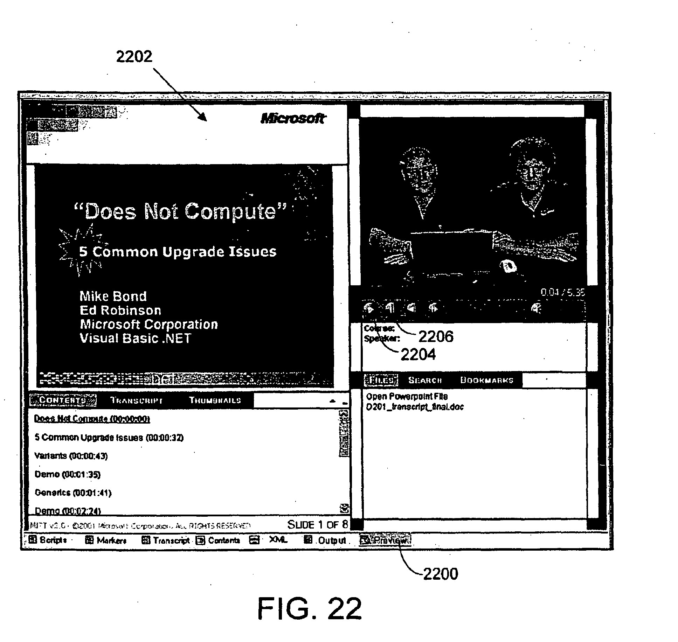

The preview display allows the user to view the presentation as it will appear to a viewer. Referring to Fig. 22, selecting the preview tab 2200 causes the presentation production system to do a fast build and display the project 2202 within the work sector of the presentation tool window. The author can pause the preview using the pause button 2206 and restart the preview using the paly button 2204. In this way, the author can then review the selections of color, font, layout, and timing that have been made to date. This allows the author to check the quality of and preview their work within the presentation production system itself, and to change it as needed. To this end, the user can pause the preview using the pause button 2206 therein, and go to the appropriate place to edit the attribute or event it is desired to change. After the desired changes are made, the user can select the preview tab 2200 once again to review the modifications.

2.7 The Visual Timeline Editor

The visual timeline editor provides a graphic representation of the scheduled script commands, markers entries and transcription segments in a "visual" timeline format. As such, it allows the user to easily see these scheduled events without having to resort to the previously-described data grids. In addition, the timeline editor gives the user the capability to move the scheduled events right from the timeline, without having to go into the respective data entry grids.

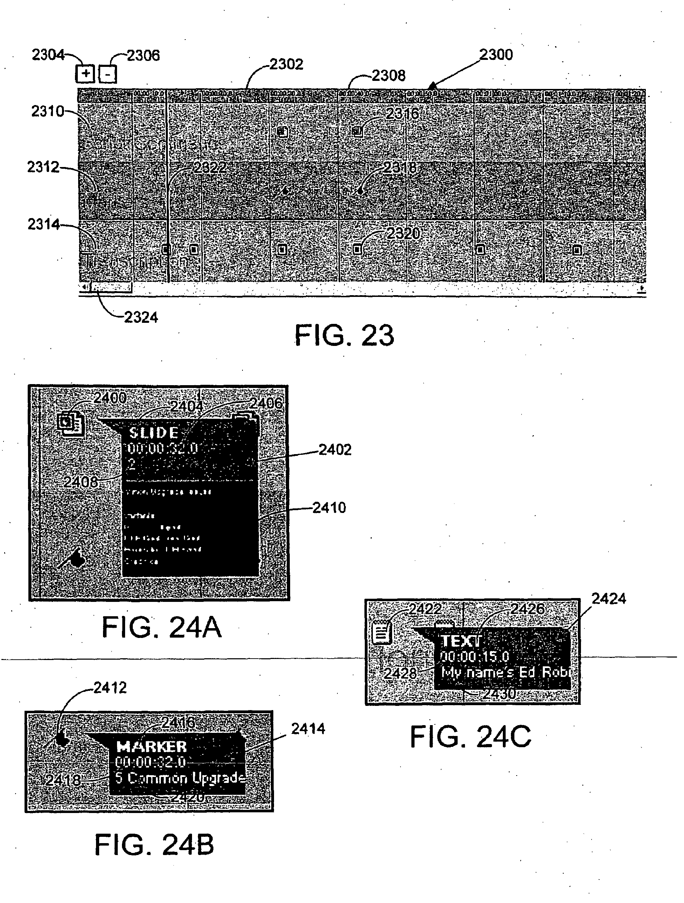

The aforementioned timeline 2300 is shown in Fig. 23. Near the top of the timeline 2300 is an elapsed time ruler 2302. This ruler 2302 is graduated into equally-spaced time intervals starting with time code "00:00:00:0 and continuing to the end of the total presentation time. Just above the ruler are two sizing buttons. The first button 2304 is a boxed plus sign, and the second button 2306 is a boxed minus sign. Each time the user selects the first button 2304, the resolution of the ruler 2302 increases such that more of the presentation timeline is seen in the same horizontal space allotted to the timeline. Conversely each time the user selects the second button 2306, the resolution of the ruler 2302 decreases such that less of the presentation timeline is shown. To account for the ruler 2302 representing more of the presentation timeline, either the number of graduations per unit length is increased, or each time interval is made to represent a longer period of time. For example, where in one view each graduation might represent a 1 second interval, the graduations could represent a 2 second interval in a view showing more of the presentation timeline. Regardless of the ruler's scope, time code designations 2308 appear periodically at equal intervals along the ruler so that the user can determine where in the presentation timeline an event depicted below the ruler will occur. It is noted that the interval between these time code designations will increase as more of the timeline is shown, so that they can remain at a size that is legible to the user. In the view depicted in Fig. 23, each graduation represented a two second interval and a time code designation was provided every 10 seconds. Below the ruler 2302 are three horizontal event scheduling bands. The first band 2310 depicts where a script command event will occur in the presentation timeline, whereas the second band 2312 and third band 2314 respectively depict where the aforementioned contents markers have been set and where each transcription segment begins. The script commands, markers and transcription segment starting points are represented by different icons. In tested versions of the timeline, the icon 2316 shown in the scripts command band 2310 was used to represent a scripts command, the icon 2318 shown in the markers band 2312 was used to represent a contents marker, and the icon 2320 shown in the transcription band 2314 was used to represent a transcription segment starting point. While these particular icons where employed in tested versions of the timeline, other icons could be used in their place. However, it is preferred that whatever icon is used in each band, it be readily distinguishable from the other icons used in the other bands. It is noted that the icons are centered about the elapse time corresponding to their time code.

The timeline 2300 also includes a vertical bar 2322 representing the elapsed time of the presentation. When the master track program is playing, this bar 2322 moves horizontally across the ruler 2302 and scheduling bands 2310, 2312, 2314, showing the user the current elapsed time of the presentation and its relation to the scheduled events. When the master track program is paused, the line 2322 stops moving and remains at a place representing the elapsed time of the program. The user can drag the bar 2322 back and forth along the timeline (e.g., using a standard graphical dragging procedure). When the user re-positions the bar 2322 in this manner, the presentation production system jumps the master track program to the point corresponding to the elapsed time indicated by the line. In addition, the system causes the presentation slide displayed in the aforementioned presentation slide preview sector to change to the slide scheduled to be displayed at the elapsed time now indicated by the bar 2322, assuming the bar passes a scheduled slide change as represented by the a script command icon 2316 appearing in the script command band 2310.

A presentation will typically be long enough that its entire timeline will not fit within the horizontal space allocated to the timeline 2300, regardless of the sizing. Accordingly, a scroll bar 2324 is provided at the bottom of the timeline 2300 to bring into view hidden portions of the presentation timeline. It is noted that if the aforementioned vertical bar 2322 is dragged to the end of the displayed portion of the timeline 2300, the view scrolls automatically such that the portions of the presentation timeline beyond that end are brought into view.

In the foregoing way the user is able to use the timeline editor to move through the presentation to review a place of interest. Further, the user can view the details of a scheduled event. Specifically, the user can place the screen cursor over an icon 2316, 2318, 2320 displayed in the timeline 2300 (i.e., a standard hover maneuver). This results in the appearance of a pop-up window that provides details about the event represented by an icon. For example, referring to Fig. 24A, if the user hovers the cursor over a script command icon 2400, a pop-up window 2402 appears that details the script type 2404 (e.g., slide), the time code associated with the event 2406 and the script parameter 2408 (e.g., [slide no.] 2). In addition, a thumbnail of the slide 2410 can be displayed in the pop-up window as well. Similarly, as shown in Fig. 24B, if the user hovers the cursor over a marker icon 2412, a pop-up 2414 appears detailing the event type 2416 (namely "Marker"), the time code associated with the marker 2418 and the name of the marker 2420 (e.g., "5 Common Upgrades"). And, as shown in Fig. 24C, if the user hovers the cursor over a transcription icon 2422, a pop-up 2424 appears detailing the event type 2426 (namely "Text" referring to transcription text), the time code associated with transcription text 2428 and the first few words of the transcription text 2430 (e.g., "My name's Ed").

Still further, referring once again to Fig. 23, the user can select an icon 2316, 2318, 2320 in the timeline 2300 (e.g., via single-click maneuver). This results in the presentation production system displaying the data grid associated with the event represented by the selected icon in the work sector, with that event displayed and highlighted therein. In this way the user can view the full details associated with the event, rather than just the information that can fit in the pop-up.

In addition to reviewing, the user can also edit the presentation using the timeline editor. For example, the user can select and drag the script command, marker and transcription segment icons 2316, 2318, 2320, within their respective bands 2310, 2312, 2314 to a new location in the presentation timeline. When the user repositions an icon in this way, the presentation production system automatically update the time code associated with the event represented by the icon in the appropriate data grid, and revises the presentation data file to reflect the new schedule. For example, assume that the user repositions a script command icon 2316 representing the display of a particular presentation slide, to a location in the script command band 2310 corresponding to an earlier point in the presentation timeline. The presentation production system would respond by replacing the time code originally entered for that event with the time code associated with the icon's new position in the timeline 2300.

The user can do much more than just move events using the timeline editor. The user can edit the details of an event associated with an icon as well. One way of accomplishing this task is to select an icon 2316, 2318, 2320 in the timeline 2300 that it is desired to edit, as described above. Once the data grid associated with the event represented by the selected icon is displayed in the work sector, the user can edit the event or any other associated event in the displayed data grid as described previously. A short-cut feature can also be invoked where the user selects an icon 2316, 2318, 2320 in the timeline 2300 using a double-click maneuver. This opens the data grid associated with the event represented by the icon as before, but this time automatically initiates the previously described pop-up in the data grid that is used to edit its entries. It is noted that once the user is working in the data grid associated with a selected icon, he or she could add new events or delete existing events, rather than just modifying them.

Another way to edit the events represented by the icons 2316, 2318, 2320 in the timeline 2300, is using a standard "right clicking" maneuver on an icon to bring up a pop-up containing a context menu of available options for manipulating the event associated with the icon (and so the underlying data stored in the presentation data file and displayed in the associated data grid). For example, the user could delete an event associated with the icon directly from the pop-up menu, rather than having to do so in the data grid corresponding to that event. In such a case, the underlying presentation data file would be changed to eliminate the event, and the timeline and associated data grid would be altered to remove the event as well.

While not shown in Fig. 23, the timeline could also include a band displaying thumbnails of certain frames of the master track program, assuming it is a video program. For example, thumbnails of every tenth frame of the master track video program could be created via conventional techniques and displayed in the timeline (set to the appropriate size) in the aforementioned master track video frame band. More or fewer thumbnails would be displayed if the timeline is resized in its scope. These thumbnails would allow the user to more easily see the relationships between the master track video and the various events represented by the icons in the timeline. In addition, the video frame thumbnails could be used to perform automatic scene detection via standard methods. The detected scene changes could then be referenced on the timeline using an appropriate icon or mark. This would make it easier for the user to graphically synchronize the events with the master track.

### 3.0 Changing Templates

It is possible to change the presentation template, even after selecting a different one and entering attribute and scheduling information. This is accomplished by the user selecting the project menu button of the presentation tool window (see 328 of Fig. 3) and then selecting the "Select Template" action from the action list that drops down. This causes the previously described template selection window 200 shown in Fig. 2 to open over the presentation tool window.

The template selection window 200 will reflect the settings chosen when the current template was selected. In addition, the horizontal strip 208 associated with the currently selected template will be highlighted in the layout display sector 206. The user can then select a different template using the same procedure described previously in connection with selecting the initial template. The presentation production system will then re-open the presentation tool window, this time reflecting the new template choice. In addition, all the attributes and scheduling data entered by the user in connection with the old template that are applicable to the newly selected template will be retained. The user can then review and modify the template as desired.

### 4.0 Saving Modified Templates

As discussed previously when a user selects a template, it is loaded with certain default attributes that the user can then modify. If the user wishes to incorporate the same modifications in future presentations, it is possible to save the modified template either to a remote server or locally. In this way the user, or anyone having access to the location where the modified template is saved, can select the template and create a presentation from it as described earlier. It is noted that just the template attributes created or modified in the aforementioned template editor property grid are saved in the new template, not any of the other metadata or scheduling information entered by the user.

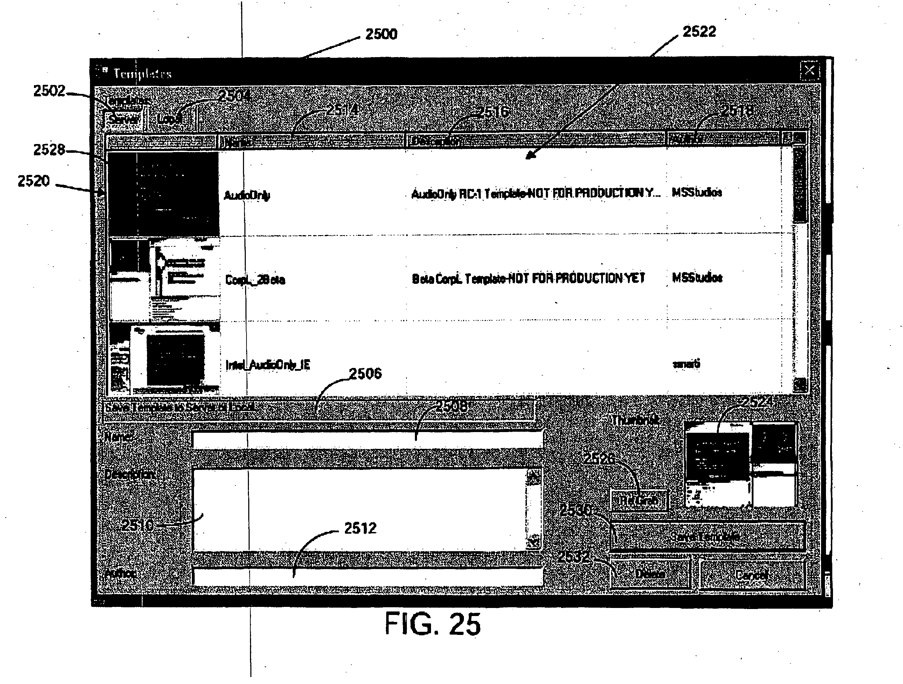

Referring to Fig. 25, to save a modified template, the user selects the file menu button of the presentation tool window (see 320 of Fig. 3) and then selects the "Templates" action from the action list that drops down. This causes a templates window 2500 to appear over the presentation tool window. The templates window 2500 is similar in appearance to the previously described template selection window, but with some significant differences. As with the template selection window, the templates window 2500 has two buttons displayed at the top, the first of which is a server button 2502, and the other of which is a local button 2504. The user selects the server button 2502 if he or she wants the modified template to be saved remotely and the host computed is connected to a network having access to the server. Whereas, the user selects the local button 2504 if he or she wants the modified template saved on the host computer. It is noted that an instruction bar 2506 is located just below the layout display sector 2522 to provide information and tips to the user on how to proceed with the template saving process. For example, in Fig. 25, the templates window 2500 is shown as it would appear when the user first opens it. At this stage, the instruction bar 2506 states "Save Template to Server of Local", thereby aiding the user in determining what to do first (i.e., select the server button 2502 or local button 2504).

Once the user has elected to save the template locally or remotely, he or she enters the name that is to be assigned to the modified template into the name field 2508. In addition, the user enters a description of the template into the description field 2510, and the name of the author or owner of the template into the author field 2512. The foregoing data appears in the "Name", "Description" and "Author" columns 2514, 2516, 2518, respectively, of the horizontal strip 2520 in the layout display sector 2522 that will be created for the modified template being entered.

The presentation production system also creates a thumbnail of the modified template from whatever image was last displayed in the preview display of the presentation tool window. This thumbnail is displayed in the thumbnail sector 2524 of the templates window, so that the user can review it. If the user decides that he or she would like a different thumbnail image, then the user minimizes the templates window to bring the presentation tool window back to the forefront. The user then runs the presentation to the point where the desired image is displayed in the preview display and pauses the presentation. The user then reinstates the templates window and selects the "Re-Grab" button 2526. This causes the presentation production system to create a new thumbnail of the modified template and to display the new thumbnail in the thumbnail sector 2524. The thumbnail displayed in the thumbnail sector 2524 is the thumbnail that will appear in the thumbnail column 2528 of the horizontal strip 2520 in the layout display sector 2522 that will be created for the modified template being entered.

Once the user is satisfied with the thumbnail and the entered data, he or she selects the "Save Template" button 2530. Finally, the user selects the "Save" button in the dialog box and the new template is saved to the default local template folder. In addition, the layout strip data is added to the header of the template file.

The next time the user goes to select a template, the aforementioned modified template, as represented by its thumbnail and the identifying information entered by the user, will appear in the layout display sector 2522 of the template selection window, assuming the user has elected to access the location where the template is saved.

It is noted that a template that was downloaded from a server can be saved to local template storage by using the forwgoing process, even if it is not modified in any way.

It is further noted that a user can delete a template using the templates window 2500 as well. This is accomplished by selecting the local button 2504, and then selecting the strip 2520 associated with the template that the user wants to delete in the layout display sector 2522. Finally, the user selects the delete button 2532 to delete the selected template.

5.0 Presentation Authoring Process

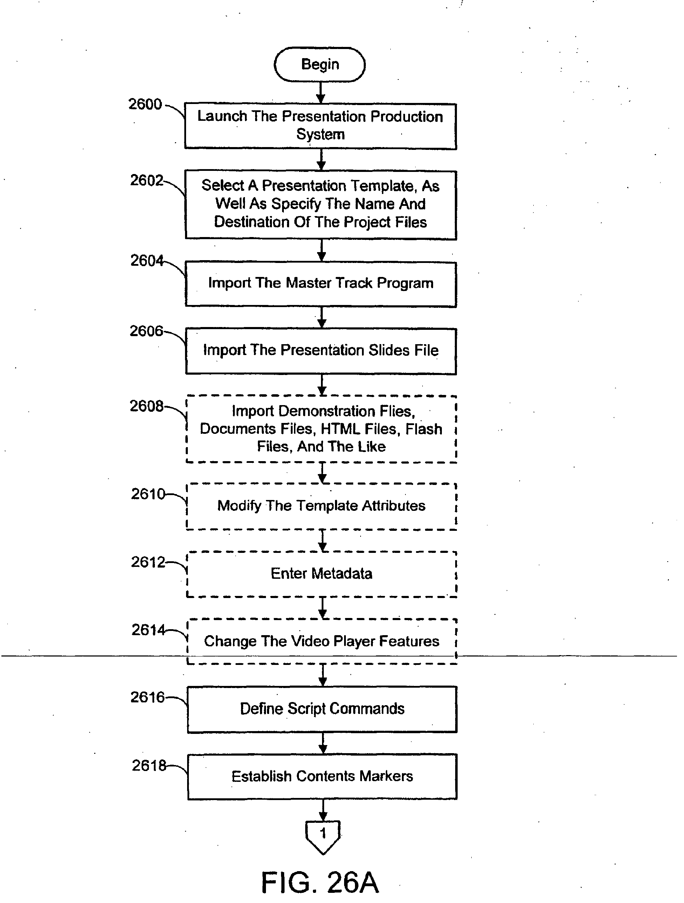

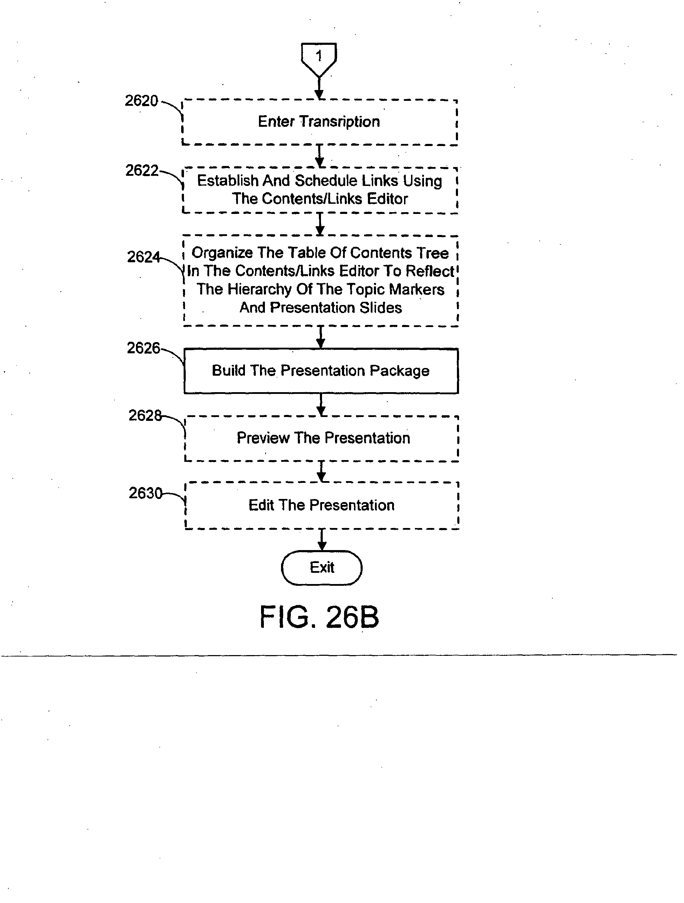

Given the above-described user interfaces of the present system, the user is able to author a presentation using the process that will now be described. Referring to Figs. 26A and B, this authoring process involves first launching the presentation production system on the user's host computer (process action 2600). This brings up the template selection window, which the user employs to select a presentation template, as well as name and specify the destination of the presentation files (process action 2602). The selected template is then loaded by the presentation production system, and the tool window is displayed and populated with default template data. The user then enters the media content information. Specifically, the user imports the master track audio or video file (process action 2604) and the presentation slides file (process action 2606). In addition, the user optionally imports any demonstration files (e.g., video, audio, and the like), documents files, HTML files, and animation files, and the like into the presentation (process action 2608). It is noted that the optional nature of the last action, and any future actions, is indicated by a broken line box in Fig. 26. Next, the user sets the properties of the template, assuming the default settings are not acceptable. This part of the process entails optionally modifying the template attributes (process action 2610), entering metadata (process action 2612) and changing the video player features (process action 2614). It is noted that the forgoing parts of the process involving entering the media content and setting the template properties can be reversed in the order that they are performed. Thus a user could set the template properties before importing the media content, if desired.

The next phase of the presentation authoring process is to create the timeline of the presentation using the previously described grids. Specifically, the user defines script commands (process action 2616), which dictate when in the master track video or audio program a presentation slide is displayed, a demonstration is launched, a file is opened (e.g., word processing, HTML or Flash file), or an address of a site is contacted. In addition, the user establishes contents markers (process action 2618), which represent a table of contents of the presentation and which specify when a new topic or sub-topic is begun in the presentation timeline. Further, in optional process action 2620, the user can enter one or more a transcriptions (in different languages) of the master track program and establish when each segment of the transcription begins in the presentation timeline. While the foregoing script commands, markers and transcription data can be entered directly using the various data grids, the user can also import text based files that contain predefined scripts, markers, and transcription data. Lastly, the user can optionally establish and schedule the appearance of one or more links that will be made available for access by a viewer of the presentation (process action 2622). It is noted that the user can also optionally organize a graphical table of contents tree to reflect the hierarchy of the topics and presentation slides (process action 2624), although this does not actually schedule any event in the presentation timeline.

Once the timeline of the presentation has been set, the user initiates a "build" of the presentation using the aforementioned project builder module (process action 2626). The presentation building procedure will be discussed in more detail shortly. The built presentation can then be previewed (process action 2628) by the user and edited (process action 2630) as necessary. These last two actions are optional, but would typically be performed. As described previously, the user can edit the presentation in a number of ways. These include using the visual timeline editor and its visual timeline to edit the scheduled events to get the proper timing of the script commands, markers, and transcription elements, or using the data grids directly to change the schedule. In addition, the user can edit the template properties as desired. For example, the user then can adjust template settings in the property grids, changing colors, output settings, as well as adding or changing metadata in multiple schema formats and languages. Further, the user could introduce new presentation slides, demonstrations, and the like and schedule them in the timeline. The user could also change the template while retaining the scheduling and at least some of the modified attributes. The presentation can be rebuilt to reflect these changes and previewed once again. It is also noted that the foregoing changes could be made prior to the initial build of the presentation during the time that the attributes and scheduling in being performed.

## 6.0 Project Building Process

The previously mentioned project builder module of the presentation production system takes all the data input by the user via the user interfaces and builds a presentation package that can be run by the presentation viewer. Generally, the project builder generates the underlying presentation files, indexes the media, Outputs the slides into the project directory, generates a presentation data file and transforms it using the selected template to generate a final output HTML presentation. Each of these actions in the build sequence will now be explained in detail.

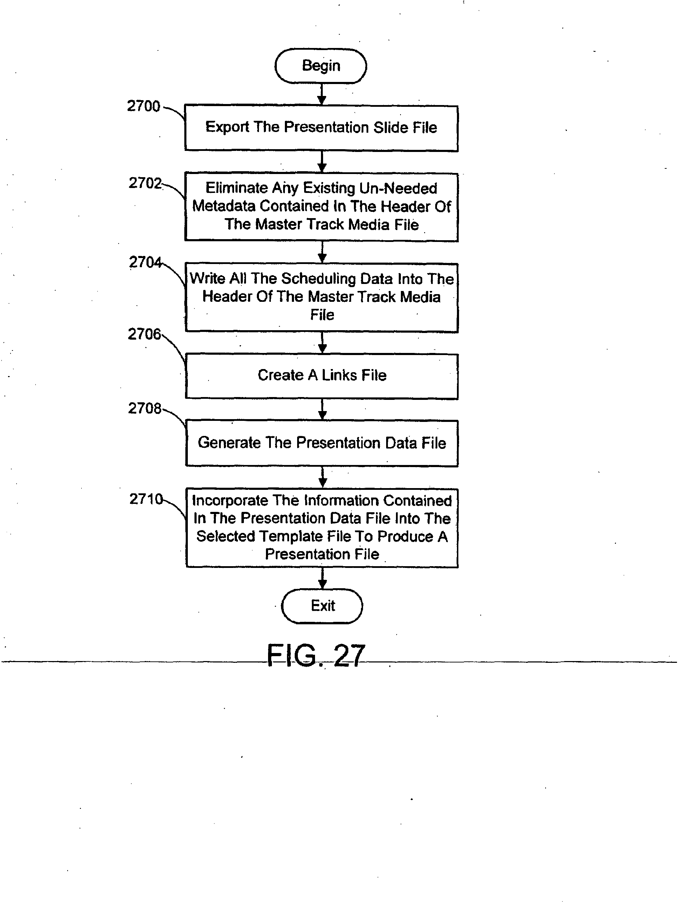

Referring to Fig. 27, the first process action 2700 of the project building process performed by the present system when the user initiates a build involves exporting the presentation slides to the system's project directory. This exporting is done using the export options specified in the template editor property grid. These may be the default options brought in with the selected template or options entered into the aforementioned grid by the user. The thumbnails generated for each slide in the presentation slide deck when the slide file was entered into the system are also stored in the presentation slide file.

The project building process continues with the video or audio media file designated as the master track being indexed. This entails eliminating any existing un-needed metadata contained in the header of the master track media file (process action 2702), and then writing all the scheduling data into the header (process action 2704). This includes adding the script commands, contents markers and transcription data to the header of the media file. The master track media file is also located in the project directory of the presentation production system. The player settings specified in the in the player property grid are also exported and written into the header of the media file. These settings may be the default options or options entered into the aforementioned grid by the user.

The project builder module then creates a links file containing all the link information entered by the user (process action 2706). In tested versions of the present presentation production system the links file was a separate XML file also residing in the project directory.

Next, the project builder module of the present system generates the aforementioned presentation data file and saves it in the root of the project directory (process action 2708). In general, the presentation data file is the final underlying data file that is generated by the presentation production system. It includes, among other things all the data specified in the property and data grids, such as the script commands, markers, transcription elements, and links, as well as template attributes and presentation metadata. The structure and contents of the presentation data file will be described in greater detail in the next section.

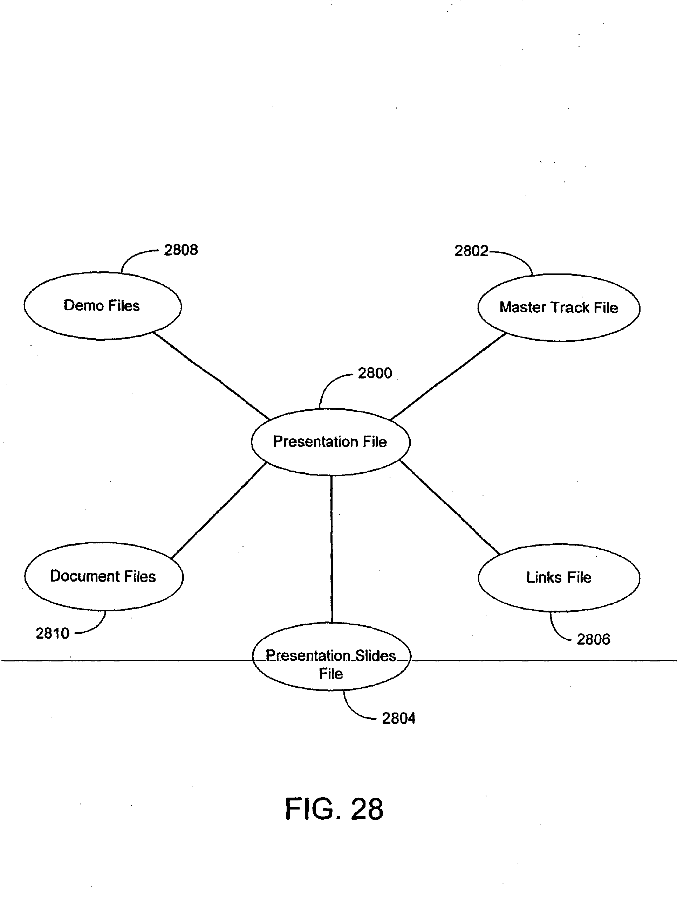

In view of the above, at this point in the building process the project directory includes the presentation data file, master track media file, links file (if any), and presentation slides file. In addition, the file associated with the selected template, any files associated with the optional demonstrations, and any files associated with the optional documents, animations and the like, are also stored in the project directory. However, the build process is not quite complete. To complete the presentation package the information contained in the presentation data file is incorporated into the selected template to produce a presentation file, which in tested versions of the present system was an HTML file (process action 2710). This HTML file is the file that the presentation viewers run to view and interact with the presentation as described earlier. Accordingly, referring to Fig. 28, the final presentation package can be represented by the presentation file 2800 as the hub which accesses the master track media file 2802 and presentation slides file 2804 to run the presentation. In addition, the presentation's HTML file may also access the optional Links file 2806, demonstration files 2808 and document files 2810 if they exist and present them in the presentation at their scheduled times.

## 6.1 The Presentation Data File

In tested versions of the present system, the presentation data file took the form of a XML file based on a standardized schema published by the IMS. The file is generated by the aforementioned project builder module during the build process. The IMS is an industry driven global consortium chartered to define and recommend standards for the e-Learning marketplace, and has developed several specifications for facilitating online distributed learning, including Learning Resource Interchange (LRN, pronounced "learn"). LRN is a content interchange descriptor that provides to content creators a standard way of identifying, sharing, updating, and creating online content and courseware. LRN is a commercial application of the IMS Content Packaging and Metadata Specifications, and supports the Advanced Distributed Learning Sharable Content Object Reference Model. Content distributed according to the IMS Content Packaging specification must contain an IMS Manifest file. The IMS Manifest file is the aforementioned presentation data file in tested version of the present system. To ensure that the IMS Manifest file can always be found within a package, it has a pre-defined name and location, i.e., imsmanifest.xml.

The structure of a LRN formatted "imsmanifest.xml" file is shown in Fig, 29. In general, the standard LRN manifest 2900 contains MetaData describing the presentation 2902 (such as Title or Description), organizations of the content 2904 (such as a Table of Contents) with a list of individual content items 2908, and a resources section 2906 having a list of individual resources 2910 (such as HTML files, graphics, or other content). Each of these sections of the manifest 2900 will now be described in more detail. In order to facilitate this explanation, an example imsmanifest. xml file listing has been provided in Appendix A. The various sections of this example file will be referred to in the description of that section.

### 6.1.1 The MetaData section

The "MetaData" section of the imsmanifest.xml contains general information about the presentation. For example, referring to the exemplary imsmanifest.xml file in appendix A, the <metadata> section includes a "General Information" sub-section that provides some general information about the presentation and the imsmanifest.xml file, such as the schema (i.e., <schema>IMS CONTENT</schema>") and the version of the schema (i.e., <schemaversion>1.0</schemaversion>).

In addition to the general metadata sub-section, IMS supports extensible metadata using the XML Schema Definition language (XSD, XDR) through the use of other LOM elements as an extension or as new elements (defined in a specific namespace). Namespace elements typically contain a meaningful prefix, such as "adl" (to represent the Advanced Distributed Learning initiative) to uniquely identify its extensions. IMS recommends the use of the W3C Recommendation for Namespaces. In the case of the present system, the "imsmanifest" file provides extended metadata sections to support video and audio, indexed markers, script commands as well as transcription and template metadata. Each of these will be described in the sections to follow.

### 6.1.1.1 <mittdata> Element

The "<mittdata>" sub-section is a child of the IMS <metadata> section.
This section supports two tags, "<extendedmetadata>" and "<ui>" data.

### 6.1.1.1.1 <extendedmetadata>Element

This sub-section is for extensible schema's associated with user defined templates in presentation production system. Authors can define their own namespaces and schema definitions and add custom schemas related to their playback templates under this section. In tested versions of the system and in the example listing of appendix A, a "<msstudios>" schema was defined for default template metadata, such as the title of the presentation and the speaker's name (although neither was actually specified in the example listing).

### 6.1.1.1.2 <ui> Element

The UI sub-section is used to store layout and user interface display information that is to be employed by the selected template. Authors can also define their own namespace and schema definition and add custom schemas related to their own unique presentation templates in this section. In tested embodiments of the presentation production system and as found in the example listing in appendix A, a "<msstudios>" schema is defined and shows the properties associated with tested versions of the system which includes features such as font, logo, colors, and Export options for the presentation slides. In other words, this sub-section includes all the data entered in to the property grids by the user or populated therein by default when the template was selected.

### 6.1.2 The Organizations Section

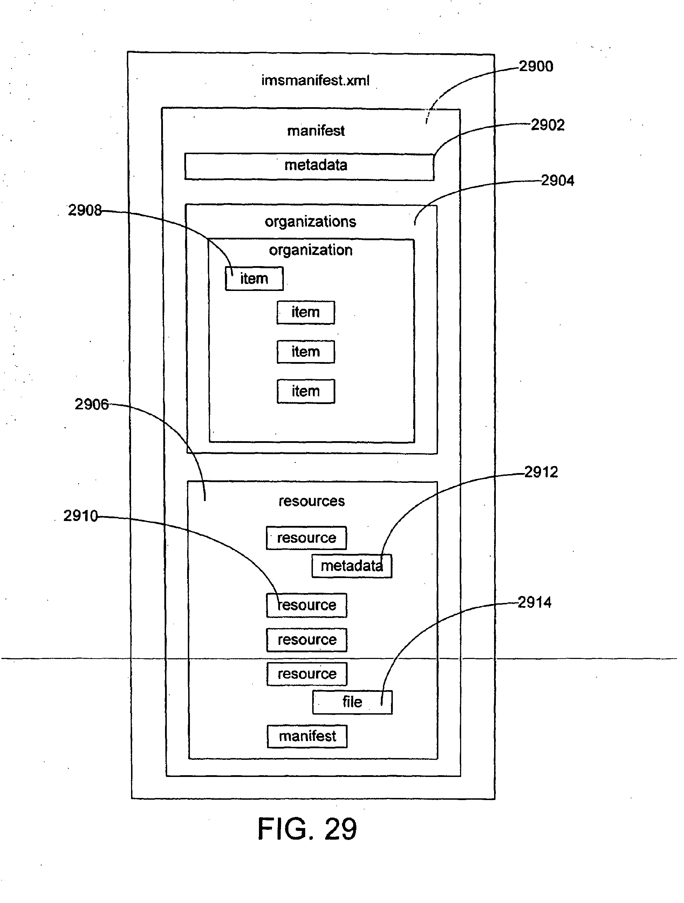

The IMS <organizations> element is used to describe the navigation structure for the manifest. Individual organization types are declared as a sub-elements nested within the <organizations> element. For example, the table of contents of the presentation is a primary organizations section type and is designated by the <tableofcontents> element. The <tableofcontents> element has one or more <item> sub-elements that include attributes such as a contents title. An example of the <organizations> section of the imsmanifest.xml file can be found in the listing provided in appendix A.

### 6.1.3 The Resources Section

The IMS <resources> element is used to identify a series of files and content sources that are used to make up the final presentation. Individual resources are declared as a <resource> element (i.e., without an "s") nested within the <resources> element. A <resource> element may also have a <metadata> sub-element (see 2912 in Fig. 29). The <metadata> sub-element is used to define information about the resource and used in conjunction with standard IMS metadata schema. Further, a <resource> element may have a <file> sub-element (see 2914 in Fig. 29). The <file> sub-element is used to point to the actual file and contain metadata related to this file.

Here too authors can also define their own namespace and schema definition and add custom schemas related to their own unique presentation in this section. In tested versions of the present system, a custom <resource> element called <mittdata> was included.

### 6.1.3.1 <mittdata> Element

The <mittdata> element provides an area wherein further metadata related to the playback of a resource in the »presentation production system can be extended. This section is primarily used to hold the <media> element extension, but could be utilized for other custom metadata related to other more modern media formats. An example of the <resources> section including a <mittdata> element is shown in the listing provided in appendix A.

### 6.1.3.2 <media> Element

The <media> element is a custom element extension defined to hold metadata associated with the master track of the presentation. This element holds scheduling data and other information about the master track including start time, stop time, codecs used, markers, script commands, transcription entries, player setting and other metadata also stored in the master track media file. In tested version of the presentation production system, the following defined sub-elements of the <media> element were included.

### 6.1.3.2.1

The abstract sub-element is used for a short description of the media file and what it contains. The lang attribute can be utilized to allow for multiple language abstract elements defined within a single <media> section.

### 6.1.3.2.2 <contactname>

The contact name sub-element is used to define the name of the individual to contact regarding information about the media file

### 6.1.3.2.3 <contactemail>

The contact mail sub-element is used to define the Email address of the individual to contact regarding information about the media file.

### 6.1.3.2.4 <isprotected>

The contact name sub-element is a Boolean term used to define whether the media is protected by Digital Rights Management.

### 6.1.3.2.5 <starttime time="00:00:00.00">

The start time sub-element is used to define the time at which to start playing the media file from.

### 6.1.3.2.6 <endtime time="00:05:00.00">

The end time sub-element is used to define the time at which to stop playing the media file.

### 6.1.3.2.7 <availablebandwidths>

The available bandwidths sub-element is used to list the available bandwidths.

6.1.3.2.8 <codecs>

The codecs sub-element is used to list the codecs that are available within the media file. It is noted that <video> and <audio> are sub-elements of <codecs>.

6.1.3.2.9 <markers>

As described previously markers are positions within the media file that are defined within the organizations section. These can be thought of as table of contents points within the media file that a user could easily reference and seek to. Each markers sub-element defines the time code and an "indentifierref" attribute to find its related <item> within the <organization> section. For example, a markers sub-element would look like:

<marker time="00:00:00.0" identifierref="MANIFEST01_ITEM1">

6.1.3.2.10 <scriptcommands>

This sub-element stores all of the script commands. The time code, type of command, and parameter of the command are stored as attributes of a <script> sub-element. For example, a script commands sub-element could look like:

<script time="00:00:00.0" stype="Slide" sparam="1" />

6.1.3.2.11

The transcription sub-element contains multiple <transcript> sub-elements. The sub-element also supports a lang key to define the language that the transcription is storing. Multiple transcription sub-elements can appear within a <media> section. Each transcript sub-element is used to define a segment of the transcription of the Master Track audio. For example, a transcript sub-element could look like: <transcript time="00:01:41.0" stype="TEXT" sparam="A similar problem to variants is with generics. In Visual Basic 6 you have the active control and active form objects, and these allow you to access the currently displayed form on the screen. And you can also access the controls and private properties of that form or control." />

6.1.3.2.12 <mediatitle>

The media title sub-element is used to define the title of the media file.

6.1.3.2.13 <author>

The author sub-element is used to provide information on the author of the media file.

6.1.3.2.14 <redirector>

The redirector sub-element is used to provide the location of redirector for the master track media file in a web service application of the present presentation production system, the details of which are beyond the scope of the present application.

6.1.3.2.15 <copyright>

The copyright sub-element is used to provide Copyright information.

6.1.3.2.16 <AspectRatioX>

Aspect ratio of the encoded video's pixels.

6.1.3.2.17 <u><AspectRatioY></u>

Aspect ratio of the encoded video's pixels.

6.1.3.2.18 <u><rating></u>

Rating categories as defined by the publisher to manage content.

6.1.3.2.19 <u><bitrate></u>

The bitrate sub-element is used to define the encoded bitrate of the media file in kbps.

6.1.3.2.20 <u><imagesourcewidth></u>

The image source width sub-element is used to define the pixel width of the video image (if one is available).

6.1.3.2.21 <u><imagesourceheight></u>

The image source height sub-element is used to define the pixel height of the video image (if one is available).

6.1.3.3 <u>Other Resource Elements</u>

As can be seen at the end of the example imsmanifest.xml listing provided in appendix A, other resource elements are used to identify the various non-master track resources associated with the presentation. For example, resource elements identifying the presentation slide file and associated thumbnails, demonstration files, document files and the links file are included.

7.0 Appendix A: Example "imsmanifest.xml" File Listing

```
<?xml version="1.0" encoding="utf-8" ?>
- <manifest
    xmlns:mss="http://www.microsoft.com/msstudios/2001/MSStudios_M
    etaData.xsd" identifier="MANIFEST01" version="1.0">
- <metadata>
  <schema>IMS CONTENT</schema>
  <schemaversion>1.0</schemaversion>
- <record>
- <general>
- <title>
  <langstring lang="en_US" />
    </title>
  <catalogentry />
- <description>
  <langstring lang="en_US" />
    </description>
- <keywords>
  <langstring lang="en_US" />
    </keywords>
  <coverage />
  <structure />
    </general>
    </record>
- <mittdata>
- <extendedmetadata>
- <msstudios>
  <Title />
  <SpeakerNames/>
    </msstudios>
    </extendedmetadata>
- <ui>
```

```
- <msstudios>
  <buttonFont family="Tahoma" size="12" color="#FFFFFF" />
  <font family="Arial" size="12" color="#000000" />
  <logo href="banner.jpg" align="left" height="83" width="440"
    bgcolor="#FFFFFF" />
  <bgcolor>#404040</bgcolor>
  <borderColor>#404040</borderColor>
  <accentColor1>#404040</accentColor1>
  <accentColor2>#FFFFFF</accentColor2>
  <accentColor3>#FFFFFF</accentColor3>
  <textAreaColor>#FFFFFF</textAreaColor>
  <highLightColor>#472CAD</highLightColor>
  <transcriptHighLightColor>#CCD6EB</transcriptHighLightColor>
  <buttonBGColor>#472CAD</buttonBGColor>
  <buttonSelectColor>#66CC33</buttonSelectColor>
  <ActiveSlideThumbnailColor>#000000</ActiveSlideThumbnailColor>
  <InActiveSlideThumbnailColor>#000000</InActiveSlideThumbnailColor>

    <PreviewedSlideThumbnailColor>#000000</PreviewedSlideThumbnailCo
    lor>
  <Transcript>true</Transcript>
  <SlideThumbnails>true</SlideThumbnails>
  <Bookmarks>true</Bookmarks>
  <Search>true</Search>
  <Files>true</Files>
  <Links>false</Links>
  <ShowSlideAnimations>false</ShowSlideAnimations>
  <ExportOption value="ExportJPEG" height="480" width="640" quality="75"
    />
  <RelyOnVML>false</RelyOnVML>
  <ResizeGraphics>true</ResizeGraphics>
  <UseLongFileNames>true</UseLongFileNames>
  <Encoding>msoEncodingWestern</Encoding>
  <StretchToFit>false</StretchToFit>
    </msstudios>
    </ui>
    </mittdata>
    </metadata>
- <organizations default="MANIFEST01_TOC1">
- <tableofcontents identifier="MANIFEST01_TOC1">
  <item identifier="MANIFEST01_ITEM1" identifierref="" title="Does Not
    Compute" isvisible="1" parameters="0" />
- <item identifier="MANIFEST01_ITEM2" identifierref="" title="5 Common
    Upgrade Issues" isvisible="1" parameters="0">
```

```
<item identifier="MANIFEST01_ITEM3" identifierref="" title="Variants"
    isvisible="1" parameters="0" />
    </item>
<item identifier="MANIFEST01_ITEM4" identifierref="" title="Demo"
    isvisible="1" parameters="0" />
<item identifier="MANIFEST01_ITEM5" identifierref="" title="Generics"
    isvisible="1" parameters="0" />
<item identifier="MANIFEST01_ITEM6" identifierref="" title="Demo"
    isvisible="1" parameters="0" />
<item identifier="MANIFEST01_ITEM7" identifierref="" title="OLE Container
    Control" isvisible="1" parameters="0" />
<item identifier="MANIFEST01_ITEM8" identifierref="" title="Demo"
    isvisible="1" parameters="0" />
<item identifier="MANIFEST01_ITEM9" identifierref="" title="Errors in COM
    Events" isvisible="1" parameters="0" />
<item identifier="MANIFEST01_ITEM10" identifierref="" title="Demo"
    isvisible="1" parameters="0" />
<item identifier="MANIFEST01_ITEM11" identifierref="" title="Graphics"
    isvisible="1" parameters="0" />
<item identifier="MANIFEST01_ITEM12" identifierref="" title="Demo"
    isvisible="1" parameters="0" />
<item identifier="MANIFEST01_ITEM13" identifierref="" title="Where do you
    want to go today?" isvisible="1" parameters="0" />
    </tableofcontents>
    </organizations>
- <resources MaxResourceNumber="11">
- <resource identifier="Resource1" type="windowsmedia"
    href="media/D201.wmv">
<file href="media/D201.wmv" />
- <mittdata>
- <media>
<abstract lang="en_US" />
<contactname />
<contactemail />
<isprotected>false</isprotected>
<starttime time="00:00:00.00" />
<endtime time="00:05:00.00" />
<availablebandwidths />
- <codecs>
<video codec="Windows Media Video V8" />
<audio codec="ACELP.net" />
    </codecs>
- <markers MaxIdentifierRef="13">
<marker time="00:00:00.0" identifierref="MANIFEST01_ITEM1">Does Not
    Compute</marker>
```

```
<marker time="00:00:32.0" identifierref="MANIFEST01_ITEM2">5 Common
    Upgrade Issues</marker>
<marker time="00:00:43.0"
    identifierref="MANIFEST01_ITEM3">Variants</marker>
<marker time="00:01:35.0"
    identifierref="MANIFEST01_ITEM4">Demo</marker>
<marker time="00:01:41.0"
    identifierref="MANIFEST01_ITEM5">Generics</marker>
<marker time="00:02:24.0"
    identifierref="MANIFEST01_ITEM6">Demo</marker>
<marker time="00:02:28.0" identifierref="MANIFEST01_ITEM7">OLE
    Container Control</marker>
<marker time="00:02:55.0"
    identifierref="MANIFEST01_ITEM8">Demo</marker>
<marker time="00:02:59.0" identifierref="MANIFEST01_ITEM9">Errors in
    COM Events</marker>
<marker time="00:03:56.0"
    identifierref="MANIFEST01_ITEM10">Demo</marker>
<marker time="00:04:01.0"
    identifierref="MANIFEST01_ITEM11">Graphics</marker>
<marker time="00:05:00.0"
    identifierref="MANIFEST01_ITEM12">Demo</marker>
<marker time="00:05:05.0" identifierref="MANIFEST01_ITEM13">Where do
    you want to go today?</marker>
    </markers>
- <scriptcommands>
<script time="00:00:00.0" stype="Slide" sparam="1" />
<script time="00:00:32.0" stype="Slide" sparam="2" />
<script time="00:00:43.0" stype="Slide" sparam="3" />
<script time="00:01:35.0" stype="Slide" sparam="3" />
<script time="00:01:36.0" stype="Demo" sparam="Demo1.asx" />
<script time="00:01:41.0" stype="Slide" sparam="4" />
<script time="00:02:24.0" stype="Slide" sparam="4" />
<script time="00:02:25.0" stype="Demo" sparam="Demo2.asx" />
<script time="00:02:28.0" stype="Slide" sparam="5" />
<script time="00:02:55.0" stype="Slide" sparam="5" />
<script time="00:02:56.0" stype="Demo" sparam="Demo3.asx" />
<script time="00:02:59.0" stype="Slide" sparam="6" />
<script time="00:03:56.0" stype="Slide" sparam="6" />
<script time="00:03:57.0" stype="Demo" sparam="Demo4.asx" />
<script time="00:04:01.0" stype="Slide" sparam="7" />
<script time="00:05:00.0" stype="Slide" sparam="7" />
<script time="00:05:01.0" stype="Demo" sparam="Demo5.asx" />
<script time="00:05:05.0" stype="Slide" sparam="8" />
    </scriptcommands>
```

-
    <transcript time="00:00:00.0" stype="TEXT" sparam="Ed: Hi. In this short session, we'll be looking at the five most common upgrade issues that you have upgrading from VB6 to Visual Basic.NET. And if you are upgrading applications, you're likely to see at least one of these issues during your upgrade." />
    <transcript time="00:00:15.0" stype="TEXT" sparam="My name's Ed Robinson. I'm one of the Program Managers on the Visual Basic.NET Team.\n" />
    <transcript time="00:00:19.0" stype="TEXT" sparam="Mike: And I'm Mike Bond. I'm the Development Lead on the Visual Basic.NET Team. Now Ed's going to do the talking, and I'm going to do the walking, which means he's going to present the information to you, and for each issue I will demonstrate a short demo.\n" />
    <transcript time="00:00:32.0" stype="TEXT" sparam="Ed: So here's what we'll cover today: variants, generic objects, the OLE container control, errors that happen in COM events, and also graphics.\n" />
    <transcript time="00:00:43.0" stype="TEXT" sparam="Visual Basic 6, you have the variant data type, and the object data type, which both effectively do almost the same thing. They are both late bound data types. They can be assigned to any kind of object whether it's an integer, or a text box, or a form." />
    <transcript time="00:01:01.0" stype="TEXT" sparam="So one of the challenges with upgrading is that the upgrade wizard has to work out what to do with each object: if it has to resolve default properties, if it has to enter coercions when it's moving code to Visual Basic.NET." />
    <transcript time="00:01:15.0" stype="TEXT" sparam="And for variants, it can't determine this, because variants are inherently late bound, and at design time the Visual Basic.NET upgrade wizard can't tell what do with the variable.\n" />
    <transcript time="00:01:28.0" stype="TEXT" sparam="So let's look at an example of where this is a problem, and what you should do to fix this sort of problem in your code.\n" />
    <transcript time="00:01:41.0" stype="TEXT" sparam="A similar problem to variants is with generics. In Visual Basic 6 you have the active control and active form objects, and these allow you to access the currently displayed form on the screen. And you can also access the controls and private properties of that form or control." />
    <transcript time="00:02:02.0" stype="TEXT" sparam="Visual Basic.NET is a much more strongly typed language. So with active controls and active forms, you can't access any of the controls on the forms, and you can't access any of the private user defined properties.\n" />

```
<transcript time="00:02:18.0" stype="TEXT" sparam="So let's see an
    example of where this is a problem, and what you can do to fix the
    problem.\n" />
<transcript time="00:02:28.0" stype="TEXT" sparam="Thanks Mike. The
    OLE container control can be used in Visual Basic 6 to embed an
    Excel spreadsheet or a Word document onto a form, and
    unfortunately in Visual Basic.NET, we don't have the OLE container
    control anymore. However, in many cases you can use a web
    browser ActiveX control to give the same effect, with just a little bit
    of extra work on your part.\n" />
<transcript time="00:02:52.0" stype="TEXT" sparam="So let's see an
    example of how to do that.\n" />
<transcript time="00:02:59.0" stype="TEXT" sparam="Now unfortunately,
    we all write code with errors in it. And I know, don't try to say you
    don't because we all know that you do. And one of the important
    things with the development environment is that it picks up the
    errors and reports them to you. And now we're going to look at a
    limitation of Visual Basic.NET.\n" />
<transcript time="00:03:19.0" stype="TEXT" sparam="If you've got a form
    with an ActiveX control on it, like a tree-view control, or if you define
    a COM object and code that raises events -- if you've got events that
    are being raised from COM objects -- and if you've got code that's
    written in these events that causes an error, then a limitation in
    Visual Basic.NET is that these errors are not reported. The code
    that's running, and that causes an error, silently aborts and silently
    quits.\n" />
<transcript time="00:03:49.0" stype="TEXT" sparam="So let's look at an
    example of how to catch this little problem and how to fix this
    problem.\n" />
<transcript time="00:04:01.0" stype="TEXT" sparam="Thanks Mike. Now
    one of the most fun things that you can do to your application is add
    really cool graphics, and Visual Basic.NET has an entire set of new
    graphics classes called GDI+ that are very, very powerful. And, we're
    going to show those to you today." />
<transcript time="00:04:18.0" stype="TEXT" sparam="So this is quite
    different than VB6. In Visual Basic 6, all of the graphic functions --
    like circle, line and print -- they were spread out all across the
    language. Some of the methods were available on a form, and some
    were from code." />
<transcript time="00:04:32.0" stype="TEXT" sparam="In Visual Basic.NET,
    it's a much more coherent set of graphics programming. So the
    unfortunate part of this is that you can't automatically upgrade your
    VB6 graphics functions to Visual Basic.NET.\n" />
```

```
<transcript time="00:04:50.0" stype="TEXT" sparam="So Mike's now going
    to show us how to draw a circle on a form in Visual Basic 6, and how
    to do the same thing in Visual Basic.NET.\n" />
<transcript time="00:05:06.0" stype="TEXT" sparam="So now we're at the
    end of our demos, and I hope you had as much fun as we had. I think
    the key thing to remember is that for every problem, there is a
    solution. Am I right on that one, Mike?\r" />
<transcript time="00:05:18.0" stype="TEXT" sparam="Mike: Oh, exactly.
    And I hope that you've taken the information that we've presented
    today, and the demos, and you're able to take your Visual Basic 6
    applications and upgrade them quickly to Visual Basic.NET, and get
    up and going.\n" />
<transcript time="00:05:31.0" stype="TEXT" sparam="Ed: Thanks very
    much for watching.\n" />
    </transcription>
<mediatitle />
<author />
<redirector>media/D201.asx</redirector>
<copyright />
<AspectRatioX>0</AspectRatioX>
<AspectRatioY>0</AspectRatioY>
<rating>G</rating>
<bitrate>110</bitrate>
<imagesourcewidth>320</imagesourcewidth>
<imagesourceheight>240</imagesourceheight>
<AudioCodec>ACELP.net</AudioCodec>
<VideoCodec>Windows Media Video V8</VideoCodec>
    </media>
    </mittdata>
    </resource>
- <resource identifier="Resource2" type="Slide"
    href="Powerpoint/D201.ppt">
    <file />
    </resource>
- <resource identifier="Resource3" type="VML"
    href="PowerPoint/slides.htm">
    <file />
    </resource>
- <resource identifier="Resource4" type="ThumbnailFolder"
    href="PowerPoint/Thumbnails">
    <file />
    </resource>
- <resource identifier="Resource5" type="Demo" href="Demo1.wmv">
    <file />
    </resource>
```

```
- <resource identifier="Resource6" type="Demo" href="Demo2.wmv">
  <file />
    </resource>
- <resource identifier="Resource7" type="Demo" href="Demo3.wmv">
  <file />
    </resource>
- <resource identifier="Resource8" type="Demo" href="Demo4.wmv">
  <file />
    </resource>
- <resource identifier="Resource9" type="Demo" href="Demo5.wmv">
  <file />
    </resource>
- <resource identifier="Resource10" type="RelatedDocuments"
    href="D201_transcript_final.doc">
  <file />
    </resource>
- <resource identifier="Resource11" type="Links" href="links.xml">
  <file href="links.xml" />
    </resource>
    </resources>
    </manifest>
```

**Claims**

1. In a computer system having a graphical user interface including a display, user interface selection device and user interface data entry device, a presentation production process for authoring a presentation having multi-media components, comprising process actions for:

   displaying a template selection window on the display comprising one or more presentation layouts representing the appearance of a presentation window associated with the presentation being authored, wherein each presentation layout corresponds to a presentation template that is capable of rendering said presentation window and playing a presentation when populated with the media components making up the presentation and scheduling information specifying when each media component and other user-entered events are to be displayed or played in the presentation window; and
   displaying a presentation tool window on the display in lieu of the template selection window in response to the user selecting a template via said selection device and the template associated with the selected layout being imported into the presentation production process, wherein the presentation tool window comprises a plurality of sectors which are employed by the user using said selection and data entry devices to import and preview media components, enter and modify presentation properties, enter and modify said scheduling information, and to view informational panes.

2. The process of Claim 1, wherein the process action of displaying the template selection window, comprises an action of including a user-selectable server button which when selected populates the template selection window with presentation layouts obtained from one or more prescribed remote servers connected via a computer network to a host computer of said computer system.

3. The process of Claim 1, wherein the process action of displaying the template selection window, comprises an action of including a user-selectable local button which when selected populates the template selection window with presentation layouts residing in a memory of the host computer.

4. The process of Claim 1, wherein the process action of displaying the template selection window, comprises an action of including an information sector which provides contextural information concerning how to proceed with the template selection procedure.

5. The process of Claim 1, wherein the process action of displaying a presentation tool window, comprises an action of displaying a project file sector which displays in a file tree format, folder icons representing the types of media components that can be imported, as well as file icons dependent from each folder icon representing actual media component files of that type which have been imported.

6. The process of Claim 1, wherein the process action of displaying a presentation tool window, comprises an action of displaying a video preview sector which plays a video or audio program which has been designated as the master track program of the presentation being authored, wherein the master track program acts as the main media component of the presentation from which all the other media components are scheduled.

7. The process of Claim 1, wherein the process action of displaying the presentation tool window, comprises and action of displaying a presentation properties sector which at any one time displays one of a series of property grids each of which comprises a list of attributes controlling the appearance and functionality of the presentation window of the presentation being authored, or providing information about the presentation, for the purpose of allowing the user to view, specify or modify the attributes and information.

8. The process of Claim 1, wherein the types of media components that can be imported comprise a master track video or audio program representing the main presentation material and the presentation timeline from which all presentation events are scheduled, and wherein the process action of displaying the presentation tool window, comprises an action of displaying a work sector which at any one time displays one of a series of informational panes, or one of a series of data entry grids for entering and modifying scheduling data in reference to an elapsed time of the master track program.

9. The process of Claim 1, further comprising the process action of changing the selected template either before or after the user imports media components, enters presentation properties, and enters scheduling information.

10. The process of Claim 1, further comprising the process action of saving a modified version of the selected template after the user entered or modified presentation properties associated with the selected template.

11. The process of Claim 1, further comprising the process action of deleting a template.

12. A computer-implemented process for authoring an interactive presentation having multi-media components, comprising using a computer to perform the following process actions:

   inputting a user-selected presentation template comprising a template file specifying layout features and interactive functionality for an interactive presentation window which when rendered displays the presentation being authored to a viewer;
   displaying a presentation tool window to the user authoring the presentation and populating it with the selected template's layout and functionality data, said presentation tool window providing graphic user interfaces to assist the user in tasks comprising specifying media files to be imported, modifying the layout and functionality data and entering scheduling information associated with the presentation;
   importing media files comprising the multi-media content of the presentation as specified by the user via the presentation tool window;
   inputting user-provided scheduling data for the presentation specifying when each component of the multi-media content is to be played or displayed in the presentation window;
   generating a presentation data file comprising all the layout and functionality data, as well as scheduling data, associated with the presentation being authored; and
   building a presentation package comprising exported versions of the imported media components and the presentation file, wherein said presentation file is executable by a viewer and when executed renders said presentation window for viewing the presentation.

**13.** The process of Claim 12, wherein the process action of importing media files, comprises the actions of:

importing a master track video or audio file comprising a video or audio program representing the main presentation material and the timeline from which all presentation events are scheduled; and
importing a presentation slides file comprising presentation slides which support the presentation material provided in the master track video or audio.

**14.** The process of Claim 12, wherein the process action of importing media files, comprises the action of importing one or more demonstration files each comprising a video, audio, or animation demonstration program.

**15.** The process of Claim 12, wherein the process action of importing media files, comprises the action of importing one or more document files each comprising a work processing, spreadsheet, or HTML document.

**16.** The process of Claim 12, further comprising a process action of inputting user-provided scheduling data in the form of a user-defined script command which dictates when in the master track video or audio program a user-specified network site is to be contacted and displayed in the presentation window.

**17.** The process of Claim 12, further comprising a process action of inputting user-provided scheduling data in the form of user-established contents markers which identify when in the master track video or audio program a particular user-named contents topic or sub-topic begins.

**18.** The process of Claim 12, further comprising a process action of inputting user-provided scheduling data in the form of user-established transcription segment indicators which identify when in the master track video or audio program a particular user-provided segment of a transcription of the master track video or audio program begins.

**19.** The process of Claim 12, wherein said user-provided segments of the transcription of the master track video or audio program can be in more than one language, and wherein the process action of inputting user-provided scheduling data in the form of user-established transcription segment indicators comprises the action of inputting user-established transcription segment indicators for each language and identifying the language associated with each segment.

**20.** The process of Claim 12, further comprising a process action of inputting user-provided scheduling data in the form of user-established link indicators which identify when in the master track video or audio program a particular user-identified link is to be displayed in the presentation window.

**21.** The process of Claim 12, further comprising a process action of inputting metadata comprising information about the presentation, said metadata being entered by the user via the presentation tool window and included in the presentation data file.

**22.** The process of Claim 12, further comprising a process action of accepting user inputs via the presentation tool window for modifying the layout and functionality data, said modifying comprising changing existing data or adding new data.

**23.** The process of Claim 12, further comprising performing subsequent to the process action of building the presentation package, a process action of previewing the presentation package in the presentation tool window.

**24.** The process of Claim 12, further comprising performing subsequent to the process action of building the presentation package, the actions of:

editing the presentation package by changing at least one of (i) the layout and functionality data in the presentation data file, (ii) the scheduling data in the presentation data file, and (iii) importing additional media files or presentation slides; and
re-building the presentation package to include the changes.

**25.** The process of Claim 12, further comprising the process actions of:

inputting a user-assigned a name and user-specified project directory storage location for the presentation package; and

storing the presentation package under the specified name at the specified location.

**26.** The process of Claim 12, wherein the process action of displaying a presentation tool window comprises an action of displaying an output panel which provides information and a status regarding the building of the presentation package including a description of any error encountered during the building process, said output panel being displayed automatically whenever the user initiates said building process.

**27.** The process of Claim 12, wherein the process action of displaying a presentation tool window comprises the actions of:

> displaying a preview display tab; and
> in response to the user selecting the preview display tab, initiating said building of the presentation package if not already performed, and displaying a preview display, wherein the preview display provides a view of the presentation as it would appear to a viewer.

**28.** A system for authoring an interactive presentation having multi-media components, comprising:

> a general purpose computing device comprising a display, user interface selection device and user interface data entry device; and
> a computer program comprising program modules executable by the computing device, wherein the computing device is directed by the program modules of the computer program to, input a user-selected presentation template comprising a template file specifying layout features and interactive functionality data for an interactive presentation window which when rendered displays the presentation being authored to a viewer; display a presentation tool window to the user authoring the presentation and populating it with the selected template's layout features and interactive functionality data, said presentation tool window providing graphic user interfaces to assist the user in tasks comprising specifying media files to be imported, modifying the layout features and interactive functionality data and entering scheduling information associated with the presentation, as well as a graphic user interface for viewing and modifying said scheduling information once entered; import media files comprising the multi-media content of the presentation as specified by the user via the presentation tool window; input user-provided scheduling data for the presentation via the presentation tool window specifying when each component of the multi-media content is to be played or displayed in the presentation window; generate a presentation data file comprising all the layout and functionality data, as well as scheduling data, associated with the presentation being authored; and build a presentation package comprising exported versions of the imported media components and the presentation file, wherein said presentation file is executable by a viewer and when executed renders said presentation window for viewing the presentation.

**29.** The system of Claim 28, wherein the imported media components comprise a master track video or audio program representing the main presentation material and a presentation timeline, and wherein all scheduling data references an elapsed time of the master track program in the form of a time code, and wherein said scheduling data comprises, script commands which establish scheduled presentation events, wherein each script command comprises a time code representing when in the presentation timeline an event is to occur, a script type representing the type of event that is scheduled by the script command, and a script parameter referencing a specific resource required to make the event happen, contents markers which identify divisions in the subject matter of the presentation being authored, wherein each contents marker comprises a time code representing when in the presentation timeline one of said divisions occurs and a title for the section of the presentation that begins at the time specified by the time code, and transcript entries which provide a segment of the transcript of the audio of the master track program, wherein each transcript entry comprises a time code representing when in the presentation timeline the transcript segment begins and the transcript segment that begins at the time specified by the time code.

FIG. 1

FIG. 2

FIG. 3

FIG. 4

FIG. 6

FIG. 5

FIG. 7

EP 1 376 406 A2

FIG. 8A

46

FIG. 8B

FIG. 8C

FIG. 9

FIG. 10

1100

| Time Code | Script Type | Script Param | |
|-----------|-------------|--------------|---|
| 00:00:00.0 | Slide | 1 | |
| 00:00:32.0 | Slide | 2 | |
| 00:00:43.0 | Slide | 3 | |
| 00:01:35.0 | Slide | 3 | |
| 00:01:36.0 | Demo | Demo1.asx | |
| 00:01:41.0 | Slide | 4 | |
| 00:02:24.0 | Slide | 4 | |
| 00:02:25.0 | Demo | Demo2.asx | |
| 00:02:28.0 | Slide | 5 | |
| 00:02:55.0 | Slide | 5 | |
| 00:02:56.0 | Demo | Demo3.asx | |
| 00:02:59.0 | Slide | 6 | |
| 00:03:56.0 | Slide | 6 | |
| 00:03:57.0 | Demo | Demo4.asx | |
| 00:04:01.0 | Slide | 7 | |
| 00:05:00.0 | Slide | 7 | |
| 00:05:01.0 | Demo | Demo5.asx | |
| 00:05:05.0 | Slide | 8 | |

1102  1104  1106

1110  1112  1114  1116

1108

Time Code:  Script Type  Script Param  Add Script Command

Scripts  Markers  Transcript  Contents  XML  Output  Preview

1118

00:00:00.0  00:00:10.0  00:00:20.0  00:00:30.0  00:00:40.0  00:00:50.0

## FIG. 11

```
start_script_table
00:00:00.0        Slide     1
00:00:32.0        Slide     2
00:00:43.0        Slide     3
00:01:35.0        Slide     3
00:01:36.0        Demo      Demo1.asx
00:01:41.0        Slide     4
00:02:24.0        Slide     4
00:02:25.0        Demo      Demo2.asx
00:02:28.0        Slide     5
00:02:55.0        Slide     5
00:02:56.0        Demo      Demo3.asx
00:02:59.0        Slide     6
00:03:56.0        Slide     6
00:03:57.0        Demo      Demo4.asx
00:04:01.0        Slide     7
00:05:00.0        Slide     7
00:05:01.0        Demo      Demo5.asx
00:05:05.0        Slide     8
end_script_table
```

# FIG. 12A

```
start_marker_table
00:00:00.0        "Does Not Compute"
00:00:32.0        5 Common Upgrade Issues
00:00:43.0        Variants
00:01:35.0        Demo
00:01:41.0        Generics
00:02:24.0        Demo
00:02:28.0        OLE Container Control
00:02:55.0        Demo
00:02:59.0        Errors in COM Events
00:03:56.0        Demo
00:04:01.0        Graphics
00:05:00.0        Demo
00:05:05.0        Where do you want to go today?
end_marker_table
```

# FIG. 12B

EP 1 376 406 A2

| Time Code | Script Type | Script Param |
|-----------|-------------|--------------|
| 00:00:00.0 | Slide | 1 |
| 00:00:20.0 | Slide | 2 |
| 00:00:43.0 | Slide | 3 |
| 00:01:35.0 | Slide | 3 |
| 00:01:36.0 | Demo | Demo1.asx |
| 00:01:41.0 | Slide | 4 |
| 00:02:24.0 | Slide | 4 |
| 00:02:25.0 | Demo | Demo2.asx |
| 00:02:28.0 | Slide | 5 |
| 00:02:55.0 | Slide | 5 |
| 00:02:56.0 | Demo | Demo3.asx |
| 00:02:59.0 | Slide | 6 |
| 00:03:56.0 | Slide | 6 |
| 00:03:57.0 | Demo | Demo4.asx |
| 00:04:01.0 | Slide | 7 |
| 00:05:00.0 | Slide | 7 |
| 00:05:01.0 | Demo | Demo5.asx |
| 00:05:05.0 | Slide | 8 |

— 1306
— 1302
— 1300

**Time Code** | **Script Type** | **Script Param**
00 05 05 0 | Slide ▼ | 8

Save | Cancel

— 1308
— 1310
1304 | 1312 | 1314

| Time Code | Script Type | Script Param | |
|-----------|-------------|--------------|--|
| | | EVENT ▼ | | Add Script Command |

Scripts | Markers | Transcript | Contents | XML

FIG. 13

52

┌1404      ┌1406

| Time Code | Marker Text |
|-----------|-------------|
| 00:00:00.0 | Does Not Compute |
| 00:00:32.0 | 5 Common Upgrade Issues |
| 00:00:43.0 | Variants |
| 00:01:35.0 | Demo |
| 00:01:41.0 | Generics |
| 00:02:24.0 | Demo |
| 00:02:28.0 | OLE Container Control |
| 00:02:55.0 | Demo |
| 00:02:59.0 | Errors in COM Events |
| 00:03:56.0 | Demo |
| 00:04:01.0 | Graphics |
| 00:05:00.0 | Demo |
| 00:05:05.0 | Where do you want to go today? |

1400

┌1410      ┌1402      ┌1408      ┌1412

Time Code:    Marker Text:

| 00 | 00 | 01 | 0 | This is my first Marker |          Add Marker |

▤ Scripts   ▤ Markers   ▤ Transcript   ▤ Contents   ▤ XML

FIG. 14

53

FIG. 15

1604      1606      1600

| Time Code | Transcript Text | |
|---|---|---|
| 00:00:00.0 | Ed: Hi. In this short session, we'll be looking at the five most common upgrade issues that you | |
| 00:00:15.0 | My name's Ed Robinson. I'm one of the Program Managers on the Visual Basic.NET Team. \n | |
| 00:00:19.0 | Mike: And I'm Mike Bond. I'm the Development Lead on the Visual Basic.NET Team. Now E | |
| 00:00:32.0 | Ed: So here's what we'll cover today: variants, generic objects, the OLE container control, errc | |
| 00:00:43.0 | Visual Basic 6, you have the variant data type, and the object data type, which both effectively | |
| 00:01:01.0 | So one of the challenges with upgrading is that the upgrade wizard has to work out what to do | |
| 00:01:15.0 | And for variants, it can't determine this, because variants are inherently late bound, and at desig | |
| 00:01:28.0 | So let's look at an example of where this is a problem, and what you should do to fix this sort of | |
| 00:01:41.0 | A similar problem to variants is with generics. In Visual Basic 6 you have the active control and | |
| 00:02:02.0 | Visual Basic.NET is a much more strongly typed language. So with active controls and active f | |
| 00:02:18.0 | So let's see an example of where this is a problem, and what you can do to fix the problem.\n | |
| 00:02:28.0 | Thanks Mike. The OLE container control can be used in Visual Basic 6 to embed an Excel spr | |
| 00:02:52.0 | So let's see an example of how to do that.\n | |
| 00:02:59.0 | Now unfortunately, we all write code with errors in it. And I know, don't try to say you don't bec | |
| 00:03:19.0 | If you've got a form with an ActiveX control on it, like a tree-view control, or if you define a COM | |
| 00:03:49.0 | So let's look at an example of how to catch this little problem and how to fix this problem.\n | |
| 00:04:01.0 | Thanks Mike. Now one of the most fun things that you can do to your application is add really | |

1614

| Time Code | Transcript Text |
|---|---|
| | |

1610     1608     1612

1602

Scripts    Markers    Transcript    Contents    XML    Output    Preview

## FIG. 16

1702     1704     1700     1706

00:02:18.0   So let's see an example of where this is a problem, and what you can do to fix the |
00:02:28.0   Thanks Mike. The OLE container control can be used in Visual Basic 6 to embed
00:02:52.0   So let's see an example of how to do that.\n

| Time Code | Transcript Text | | | 't try to say y |
|---|---|---|---|---|
| 00 02 52 0 | `<codeblock>for(i=1;i<100;i++){}` `</codeblock>` | Save | | trol, or if you c |
| | | Cancel | | to fix this prc |
| | | | | r application |
| | | | | functions – I |

00:04:50.0   So Mike's now going to show us how to draw a circle on a form in Visual Basic 6, a

1708

## FIG. 17

**FIG. 18**

**FIG. 19**

2004

```
<?xml version="1.0" encoding="utf-8" ?>
- <manifest xmlns:mss="http://www.microsoft.com/msstudios/2001/MSStudios_MetaData.xsd"
  identifier="MANIFEST01" version="1.0">
- <metadata>
   <schema>IMS CONTENT</schema>
   <schemaversion>1.0</schemaversion>
   - <record>
     - <general>
       - <title>
          <langstring lang="en_US" />
         </title>
         <catalogentry />
       - <description>
          <langstring lang="en_US" />
         </description>
       - <keywords>
          <langstring lang="en_US" />
         </keywords>
         <coverage />
         <structure />
       </general>
     </record>
   - <mittdata>
     - <extendedmetadata>
       - <msstudios>
          <Title />
          <SpeakerNames />
         </msstudios>
       </extendedmetadata>
     - <ui>
       - <msstudios>
          <buttonFont family="Tahoma" size="12" color="#FFFFFF" />
          <font family="Arial" size="12" color="#000000" />
          <logo href="banner.jpg" align="left" height="83" width="440" bgcolor="#FFFFFF" />
          <bgcolor>#66CC33</bgcolor>
```

2006

2000

2002

Scripts   Markers   Transcript   Contents   XML   Output   Preview

**FIG. 20**

FIG. 21

FIG. 22

**FIG. 23**

**FIG. 24A**

**FIG. 24C**

**FIG. 24B**

FIG. 25

Begin

2600 — Launch The Presentation Production System

2602 — Select A Presentation Template, As Well As Specify The Name And Destination Of The Project Files

2604 — Import The Master Track Program

2606 — Import The Presentation Slides File

2608 — Import Demonstration Flies, Documents Files, HTML Files, Flash Files, And The Like

2610 — Modify The Template Attributes

2612 — Enter Metadata

2614 — Change The Video Player Features

2616 — Define Script Commands

2618 — Establish Contents Markers

1

# FIG. 26A

1

2620 — Enter Transription

2622 — Establish And Schedule Links Using
The Contents/Links Editor

2624 — Organize The Table Of Contents Tree
In The Contents/Links Editor To Reflect
The Hierarchy Of The Topic Markers
And Presentation Slides

2626 — Build The Presentation Package

2628 — Preview The Presentation

2630 — Edit The Presentation

Exit

# FIG. 26B

```
                        ┌──────────┐
                        │  Begin   │
                        └────┬─────┘
                             │
                             ▼
2700 ──┐     ┌───────────────────────────────────┐
       └─────│   Export The Presentation Slide File  │
             └───────────────┬───────────────────┘
                             │
                             ▼
2702 ──┐     ┌───────────────────────────────────┐
       └─────│  Eliminate Any Existing Un-Needed  │
             │ Metadata Contained In The Header Of │
             │    The Master Track Media File      │
             └───────────────┬───────────────────┘
                             │
                             ▼
2704 ──┐     ┌───────────────────────────────────┐
       └─────│Write All The Scheduling Data Into The│
             │  Header Of The Master Track Media   │
             │               File                  │
             └───────────────┬───────────────────┘
                             │
                             ▼
2706 ──┐     ┌───────────────────────────────────┐
       └─────│         Create A Links File         │
             └───────────────┬───────────────────┘
                             │
                             ▼
2708 ──┐     ┌───────────────────────────────────┐
       └─────│   Generate The Presentation Data File │
             └───────────────┬───────────────────┘
                             │
                             ▼
2710 ──┐     ┌───────────────────────────────────┐
       └─────│Incorporate The Information Contained │
             │In The Presentation Data File Into The│
             │ Selected Template File To Produce A  │
             │          Presentation File          │
             └───────────────┬───────────────────┘
                             │
                             ▼
                        ┌──────────┐
                        │   Exit   │
                        └──────────┘
```

# FIG. 27

FIG. 28

FIG. 29